# EUROPEAN PATENT APPLICATION

(11) **EP 4 696 940 A1**
(43) Date of publication of application: **18.02.2026**
(21) Application number: 24868450.8
(22) Date of filing: 18.07.2024
(51) Int. Cl.: F24F 1/56, F24F 13/20, B21D 5/00, F16B 5/02

(54) **OUTDOOR UNIT OF AIR CONDITIONER AND MANUFACTURING METHOD THEREOF**

(30) Priority: 22.09.2023 KR 20230127499
(71) Applicant: Samsung Electronics Co., Ltd., Suwon-si, Gyeonggi-do 16677 (KR)
(72) Inventor: PARK, Jaechan, Suwon-si Gyeonggi-do 16677 (KR); KOH, Jeonguk, Suwon-si Gyeonggi-do 16677 (KR); KIM, Sungtae, Suwon-si Gyeonggi-do 16677 (KR); SUN, Woong, Suwon-si Gyeonggi-do 16677 (KR); SHIN, Kwangnam, Suwon-si Gyeonggi-do 16677 (KR); YUN, Seungjin, Suwon-si Gyeonggi-do 16677 (KR)
(74) Representative: Walaski, Jan Filip
(86) International application number: PCT/KR2024/010380
(87) International publication number: WO 2025/063468

(57) **Abstract**

An outdoor unit of an air conditioner comprises: a first body and a second body fixed by a fastener. The first body comprises: a first fixing plate comprising a first burring hole penetrated by the fastener, the first fixing plate supporting the second body; a second fixing plate comprising a second burring hole penetrated by the fastener, the second fixing plate being in contact with one surface of the first fixing plate opposite to the second body; a first flange provided along the first burring hole and protruding from the first fixing plate in a direction of penetrating the second burring hole; and a second flange provided along of the second burring hole and protruding from the second fixing plate in a direction away from the first fixing plate. An inner surface of the second flange is in contact with an outer surface of the first flange.

## Description

### [Technical Field]

The disclosure relates to an outdoor unit of an air conditioner and a manufacturing method thereof.

### [Background Art]

An air conditioner is a device that uses a refrigeration cycle to control temperature, humidity, airflow, and distribution air to be appropriate for human activities. Main components that form the refrigeration cycle include a compressor, a condenser, an evaporator, and a blower fan.

The air conditioner may be classified into a separate type in which an indoor unit and an outdoor unit are separately installed, and an integrated type in which both the indoor unit and the outdoor unit are installed in a single cabinet.

The outdoor unit of the separate type air conditioner may include an outdoor heat exchanger configured to exchange heat with outdoor air, a compressor configured to compress a refrigerant, an expansion valve unit configured to decompress the refrigerant, and a blower fan configured to generate an airflow. Additionally, the outdoor unit of the air conditioner includes a housing that accommodates the outdoor heat exchanger, the expansion valve unit, the compressor, and the blower fan. Further, a control box accommodating a printed circuit board assembly for controlling the air conditioner may be disposed inside the housing.

Each component of the outdoor unit may be fixed to each other by fastening members such as screws. In a structure that fixes components using a fastening member, a burring portion having a flange shape formed by the burring processing may be applied to reinforce the rigidity of the fastening position and improve the fastening force.

### [Disclosure]

### [Technical Problem]

Embodiments of the disclosure provide an outdoor unit of an air conditioner including an improved structure to stably support a fastening member, and a manufacturing method thereof.

Embodiments of the disclosure provide an outdoor unit of an air conditioner including an improved structure to prevent and/or reduce a screw thread of a burring flange from being worn or to prevent and/or reduce the burring flange from being damaged, and a manufacturing method thereof.

Embodiments of the disclosure provide an outdoor unit of an air conditioner including an improved structure to improve a fixing force between two bodies fixed to each other, and a manufacturing method thereof.

Embodiments of the disclosure provide an outdoor unit of an air conditioner including an improved structure to prevent and/or reduce injury to workers or damage to components such as wires using a fixing structure, and a manufacturing method thereof.

Embodiments of the disclosure provide an outdoor unit of an air conditioner including an improved structure to reduce a weight of a component, and a manufacturing method thereof.

Embodiments of the disclosure provide an outdoor unit of an air conditioner including an improved structure to reduce manufacturing costs, and a manufacturing method thereof.

Technical problems to be achieved by the present specification are not limited to the above-mentioned technical problems, and other technical problems not mentioned will be clearly understood by those skilled in the art to which the disclosure belongs from the following description.

### [Technical Solution]

An outdoor unit of an air conditioner according to an example embodiment of the disclosure may include: a first body; and a second body provided to be fixed to the first body by a fastener. The first body may include: a first fixing plate including a first burring hole configured to be penetrated by the fastener, the first fixing plate provided to support the second body; a second fixing plate including a second burring hole configured to be penetrated by the fastener and disposed to correspond to the first burring hole, the second fixing plate provided to be in contact with one surface of the first fixing plate opposite to another surface of the first fixing plate adjacent to the second body; a first flange provided along a circumference of the first burring hole and protruding from the first fixing plate in a direction of penetrating the second burring hole; and a second flange provided along a circumference of the second burring hole and protruding from the second fixing plate in a direction away from the first fixing plate. An inner circumferential surface of the second flange may be in contact with an outer circumferential surface of the first flange.

According to an example embodiment, a manufacturing method of an outdoor unit of an air conditioner, the outdoor unit including a first body and a second body fixed to the first body by a fastener, may include: placing a first fixing plate and a second fixing plate of the first body to be in contact with each other; forming a burring hole and a burring flange provided along a circumference of the burring hole, in the first body, by sequentially penetrating the first fixing plate and the second fixing plate in a direction from the first fixing plate to the second fixing plate, using a burring tool; and placing the second body, the first fixing plate, and the second fixing plate, sequentially, and fixing the second body to the first body using the fastener penetrating the second body and the burring hole.

An outdoor unit of an air conditioner according to an example embodiment of the disclosure may include: a first body; and a second body provided to be fixed to the first body by a fastener. The first body may include: a first plate portion including a first burring hole configured to be penetrated by the fastener, one surface of the first plate portion being in contact with the second body; a second plate portion including a second burring hole configured to be penetrated by the fastener, the second plate portion extending from one side of the first plate portion and being in contact with another surface of the first plate portion opposite to the one surface of the first plate portion; and a flange portion configured to support the fastener, formed along a circumference of the second burring hole, and protruding from the second plate portion in a direction away from the first plate portion.

A fixing structure according to an example embodiment of the disclosure may be configured to fix an object body and a support body using a fastener. The support body may include a first fixing plate including a first burring hole configured to be penetrated by the fastening member, the first fixing plate provided to support the object body; a second fixing plate including a second burring hole configured to be penetrated by the fastener, the second fixing plate provided to be in contact with one surface of the first fixing plate opposite to another surface of the first fixing plate adjacent to the object body; a first flange provided along a circumference of a first burring hole and protruding from the first burring hole in a direction of penetrating a second burring hole; and a second flange provided along a circumference of the second burring hole and protruding from the second fixing plate in a direction away from the first fixing plate. An inner circumferential surface of the second flange may be in contact with an outer circumferential surface of the first flange.

### [Description of Drawings]

The above and other aspects, features and advantages of certain embodiments of the present disclosure will be more apparent from the following detailed description, taken in conjunction with the accompanying drawings, in which:
FIG. 1 is a diagram illustrating an example air conditioner according to various embodiments;
FIG. 2 is a perspective view illustrating an outdoor unit of the air conditioner according to various embodiments;
FIG. 3 is an exploded perspective view illustrating the outdoor unit of the air conditioner according to various embodiments;
FIG. 4 is a diagram illustrating a front frame of the outdoor unit of the air conditioner according to various embodiments;
FIG. 5 is a partial exploded perspective view illustrating a coupling relationship between various components of a housing included in the outdoor unit of the air conditioner according to various embodiments;
FIG. 6 is a partial exploded perspective view illustrating a coupling relationship between various components of the housing included in the outdoor unit of the air conditioner according to various embodiments;
FIG. 7 is a perspective view illustrating a portion of a fixing structure of the housing included in the outdoor unit of the air conditioner according to various embodiments;
FIG. 8 is a perspective view illustrating a portion of the fixing structure of the housing included in the outdoor unit of the air conditioner according to various embodiments;
FIG. 9 is a cross-sectional view of various components of the housing included in the outdoor unit of the air conditioner according to various embodiments;
FIG. 10 is a perspective view illustrating an example method of manufacturing the fixing structure in the outdoor unit of the air conditioner according to various embodiments;
FIG. 11 is a cross-sectional view illustrating an example method of manufacturing the fixing structure in the outdoor unit of the air conditioner according to various embodiments;
FIG. 12 is a cross-sectional view illustrating an example method of manufacturing the fixing structure in the outdoor unit of the air conditioner according to various embodiments;
FIG. 13 is a cross-sectional view illustrating an example process of coupling various components of the housing in the outdoor unit of the air conditioner according to various embodiments;
FIG. 14 is a cross-sectional view illustrating an example process of coupling various components of the housing in the outdoor unit of the air conditioner according to various embodiments;
FIG. 15 is an enlarged perspective view of various components of a housing included in an outdoor unit of an air conditioner according to various embodiments;
FIG. 16 is an exploded perspective view of various components of a control box included in the outdoor unit of the air conditioner according to various embodiments;
FIG. 17 is an enlarged perspective view of various components of the control box included in the outdoor unit of the air conditioner according to various embodiments;
FIG. 18 is a partial perspective view illustrating various components included in the outdoor unit of the air conditioner according to various embodiments;
FIG. 19 is an exploded perspective view illustrating a coupling relationship between a base and a bracket coupled thereto included in the outdoor unit of the air conditioner according to various embodiments;
FIG. 20 is a perspective view illustrating a portion of a fixing structure between components included in the outdoor unit of the air conditioner according to various embodiments;
FIG. 21 is a perspective view illustrating a portion of the fixing structure between components included in the outdoor unit of the air conditioner according to various embodiments;
FIG. 22 is a perspective view illustrating a portion of a fixing structure between components included in the outdoor unit of the air conditioner according to various embodiments;
FIG. 23 is a perspective view illustrating a portion of the fixing structure between components included in the outdoor unit of the air conditioner according to various embodiments;
FIG. 24 is a perspective view illustrating a portion of a fixing structure between components included in the outdoor unit of the air conditioner according to various embodiments; and
FIG. 25 is a perspective view illustrating a portion of the fixing structure between components included in the outdoor unit of the air conditioner according to various embodiments.

### [Mode for Invention]

Various embodiments and the terms used therein are not intended to limit the technology disclosed herein to specific forms, and the disclosure should be understood to include various modifications, equivalents, and/or alternatives to the corresponding embodiments.

In describing the drawings, similar reference numerals may be used to designate similar elements.

A singular expression may include a plural expression unless otherwise indicated herein or clearly contradicted by context.

The terms "A or B," "at least one of A or/and B," or "one or more of A or/and B," A, B or C," "at least one of A, B or/and C," or "one or more of A, B or/and C," and the like used herein may include any and all combinations of one or more of the associated listed items.

The term of "and / or" includes a plurality of combinations of relevant items or any one item among a plurality of relevant items.

Herein, the expressions "a first", "a second", "primary", "secondary", etc., may simply be used to distinguish an element from other elements, but is not limited to another aspect (e.g., importance or order) of elements.

When an element (e.g., a first element) is referred to as being "(functionally or communicatively) coupled," or "connected" to another element (e.g., a second element), the first element may be connected to the second element, directly (e.g., wired), wirelessly, or through a third element.

In this disclosure, the terms "including", "having", and the like are used to specify features, numbers, steps, operations, elements, components, or combinations thereof, but do not preclude the presence or addition of one or more of the features, numbers, steps, operations, elements, components, or combinations thereof.

When an element is said to be "connected", "coupled", "supported" or "contacted" with another element, this includes not only when elements are directly connected, coupled, supported or contacted, but also when elements are indirectly connected, coupled, supported or contacted through a third element.

Throughout the disclosure, when an element is "on" another element, this includes not only when the element is in contact with the other element, but also when there is another element between the two elements.

An air conditioner according to various embodiments is a device that performs functions such as purification, ventilation, humidity control, cooling or heating in an air conditioning space (hereinafter referred to as "indoor space"), and particularly a device having at least one of these functions.

According to an embodiment, an air conditioner may include a heat pump device to perform a cooling function or a heating function. The heat pump device may include a refrigeration cycle in which a refrigerant is circulated through a compressor, a first heat exchanger, and an expansion device and a second heat exchanger. All components of the heat pump device may be embedded in one housing forming an exterior of an air conditioner, which includes a window-type air conditioner or a portable air conditioner. On the other hand, some components of the heat pump device may be divided and embedded in a plurality of housings forming a single air conditioner, which includes a wall-mounted air conditioner, a stand-type air conditioner, and a system air conditioner.

The air conditioner including the plurality of housings may include at least one outdoor unit installed outdoors and at least one indoor unit installed indoors. For example, the air conditioner may be provided in such a way that a single outdoor unit and a single indoor unit are connected through a refrigerant pipe. Alternatively, the air conditioner may be provided in such a way that a single outdoor unit is connected to two or more indoor units through a refrigerant pipe. Alternatively, the air conditioner may be provided in such a way that two or more outdoor units and two or more indoor units are connected through a plurality of refrigerant pipes.

The outdoor unit may be electrically connected to the indoor unit. For example, information (or commands) for controlling the air conditioner may be received through an input interface provided in the outdoor unit or the indoor unit. The outdoor unit and the indoor unit may operate simultaneously or sequentially in response to a user input.

The air conditioner may include an outdoor heat exchanger provided in the outdoor unit, an indoor heat exchanger provided in the indoor unit, and a refrigerant pipe connecting the outdoor heat exchanger and the indoor heat exchanger.

The outdoor heat exchanger may be configured to exchange heat between a refrigerant and outdoor air through a phase change of the refrigerant (e.g., evaporation or condensation). For example, while the refrigerant is condensed in the outdoor heat exchanger, the refrigerant may radiate heat to the outdoor air. While the refrigerant flowing in the outdoor heat exchanger evaporates, the refrigerant may absorb heat from the outdoor air.

The indoor unit is installed indoors. For example, according to the arrangement method of the indoor unit, the air conditioner may be classified into a ceiling-type indoor unit, a stand-type indoor unit, a wall-mounted indoor unit, and the like. For example, the ceiling-type indoor unit may be classified into a 4-way type indoor unit, a 1-way type indoor unit, a duct type indoor unit and the like according to a method of discharging air.

As mentioned above, the indoor heat exchanger may be configured to exchange heat between a refrigerant and outdoor air through a phase change of the refrigerant (e.g., evaporation or condensation). For example, while the refrigerant evaporates in the indoor unit, the refrigerant may absorb heat from the indoor air. The indoor space may be cooled by blowing the indoor air cooled through the cooled indoor heat exchanger. While the refrigerant is condensed in the indoor heat exchanger, the refrigerant may radiate heat to the indoor air. The indoor space may be heated by blowing the indoor air heated through the high-temperature indoor heat exchanger.

In other words, the air conditioner may perform a cooling or heating function through a phase change process of a refrigerant circulating between the outdoor heat exchanger and the indoor heat exchanger. To circulate the refrigerant, the air conditioner may include a compressor for compressing the refrigerant. The compressor may intake refrigerant gas through an inlet and compress the refrigerant gas. The compressor may discharge high-temperature and high-pressure refrigerant gas through an outlet. The compressor may be disposed inside the outdoor unit.

Through the refrigerant pipe, the refrigerant may be sequentially circulated through the compressor, the outdoor heat exchanger, the expansion device, and the indoor heat exchanger or sequentially circulated through the compressor, the indoor heat exchanger, the expansion device, and the outdoor heat exchanger.

For example, in the air conditioner, when a single outdoor unit and a single indoor unit are directly connected through a refrigerant pipe, the refrigerant may be circulated between the single outdoor unit and the single indoor unit through the refrigerant pipe.

For example, in the air conditioner, when a single outdoor unit is connected to two or more indoor units through a refrigerant pipe, the refrigerant may flow from the single outdoor unit to the plurality of indoor units through branched refrigerant pipes. Refrigerants discharged from the plurality of indoor units may be combined and circulated to the outdoor unit. For example, through a separate refrigerant pipe, each of the plurality of indoor units may be directly connected in parallel to the single outdoor unit.

Each of the plurality of indoor units may be operated independently according to an operation mode set by a user. In other words, some of the plurality of indoor units may be operated in a cooling mode while others of the plurality of indoor units is operated in a heating mode. At this time, the refrigerant may be selectively introduced into each indoor unit in a high-pressure state or a low-pressure state, discharged, and circulated to the outdoor unit along a circulation path that is designated through a flow path switching valve to be described in greater detail below.

For example, in the air conditioner, when two or more outdoor units and two or more indoor units are connected through the plurality of refrigerant pipes, refrigerants discharged from the plurality of outdoor units may be combined and flow through one refrigerant pipe, and then diverged again at a certain point and introduced into the plurality of indoor units.

All of the plurality of outdoor units may be driven or at least some of the plurality of outdoor units may not be driven according to a driving load according to an operation amount of the plurality of indoor units. At this time, through a flow path switching valve, the refrigerant may be provided to be introduced into and circulated to an outdoor unit that is selectively driven. The air conditioner may include the expansion device to lower the pressure of the refrigerant flowing into the heat exchanger. For example, the expansion device may be disposed inside the indoor unit or inside the outdoor unit, or disposed inside the indoor unit and the outdoor unit.

The expansion device may lower a temperature and pressure of the refrigerant using a throttling effect. The expansion device may include an orifice configured to reduce a cross-sectional area of a flow path. A temperature and pressure of the refrigerant passing through the orifice may be lowered.

For example, the expansion device may be implemented as an electronic expansion valve configured to adjust an opening ratio (a ratio of a cross-sectional area of a flow path of a valve in a partially opened state to a cross-sectional area of the flow path of the valve in a fully open state). According to the opening ratio of the electronic expansion valve, the amount of refrigerant passing through the expansion device may be adjusted.

The air conditioner may further include a flow path switching valve disposed on the refrigerant circulation path. The flow path switching valve may include a 4-way valve. The flow path switching valve may determine a refrigerant circulation path depending on an operation mode of the indoor unit (e.g., cooling operation or heating operation). The flow path switching valve may be connected to the outlet of the compressor.

The air conditioner may include an accumulator. The accumulator may be connected to the inlet of the compressor. A low-temperature and low-pressure refrigerant, which is evaporated in the indoor heat exchanger or the outdoor heat exchanger, may flow into the accumulator.

When a refrigerant mixture of refrigerant liquid and refrigerant gas is introduced, the accumulator may separate the refrigerant liquid from the refrigerant gas, and supply the refrigerant gas, from which the refrigerant liquid is separated, to the compressor.

An outdoor fan may be provided near the outdoor heat exchanger. The outdoor fan may blow outdoor air to the outdoor heat exchanger to promote heat exchange between the refrigerant and the outdoor air.

The outdoor unit of the air conditioner may include at least one sensor (hereinafter referred to as an outdoor unit sensor). For example, the sensor of the outdoor unit may be provided as an environment sensor. The outdoor unit sensor may be disposed at a certain position of the inside or the outside of the outdoor unit. For example, the outdoor unit sensor may include a temperature sensor configured to detect an air temperature around the outdoor unit, a humidity sensor configured to detect air humidity around the outdoor unit, or a refrigerant temperature sensor configured to detect a refrigerant temperature in a refrigerant pipe passing through the outdoor unit, or a refrigerant pressure sensor configured to detect a refrigerant pressure in a refrigerant pipe passing through the outdoor unit.

The outdoor unit of the air conditioner may include an outdoor unit communication circuitry. The outdoor unit communication circuitry may be configured to receive a control signal from an indoor unit controller of the air conditioner, which will be described later. Based on a control signal received through the outdoor unit communication circuitry, the outdoor unit may control the operation of the compressor, the outdoor heat exchanger, the expansion device, the flow path switching valve, the accumulator, or the outdoor fan. The outdoor unit may transmit a sensing value detected by the outdoor unit sensor to the indoor unit controller through the outdoor unit communication circuitry.

The indoor unit of the air conditioner may include a housing, a blower configured to circulate air inside or outside the housing, and the indoor heat exchanger configured to exchange heat with air introduced into the housing.

The housing may include an inlet. Indoor air may flow into the housing through the inlet.

The indoor unit of the air conditioner may include a filter provided to filter out foreign substance in air that is introduced into the inside of the housing through the inlet.

The housing may include an outlet. Air flowing inside the housing may be discharged to the outside of the housing through the outlet.

An airflow guide configured to guide a direction of air discharged through the outlet may be provided in the housing of the indoor unit. For example, the airflow guide may include a blade positioned in the outlet. For example, the airflow guide may include an auxiliary fan for regulating an exhaust airflow, but is not limited thereto. Alternatively, the airflow guide may be omitted.

The indoor heat exchanger and the blower arranged on a flow path connecting the inlet and the outlet may be disposed inside the housing of the indoor unit.

The blower may include an indoor fan and a fan motor. For example, the indoor fan may include an axial fan, a mixed flow fan, a crossflow fan and a centrifugal fan.

The indoor heat exchanger may be arranged between the blower and the outlet or between the inlet and the blower. The indoor heat exchanger may absorb heat from air introduced through the inlet or transfer heat to air introduced through the inlet. The indoor heat exchanger may include a heat exchange tube through which a refrigerant flows, and a heat exchanger fin in contact with the heat exchange tube to increase a heat transfer area.

The indoor unit of the air conditioner may include a drain tray disposed below the indoor heat exchanger to collect condensed water generated in the indoor heat exchanger. The condensed water contained in the drain tray may be drained to the outside through a drain hose. The drain tray may be provided to support the indoor heat exchanger.

The indoor unit of the air conditioner may include an input interface including various input circuitry. The input interface may include any type of user input means including a button, a switch, a touch screen and/or a touch pad. A user can directly input setting data (e.g., desired indoor temperature, cooling/ heating/ dehumidifying/air cleaning operation mode setting, outlet selection setting, and /or air volume setting) through the input interface.

The input interface may be connected to an external input device. For example, the input interface may be electrically connected to a wired remote controller. The wired remote controller may be installed at a specific location (e.g., a part of a wall) in an indoor space. A user can input setting data related to the operation of the air conditioner by manipulating the wired remote controller. An electrical signal corresponding to the setting data obtained through the wired remote controller may be transmitted to the input interface. Further, the input interface may include an infrared sensor. A user can remotely input the setting data for the operation of the air conditioner using a wireless remote controller. The setting data received through the wireless remote controller may be transmitted to the input interface as an infrared signal.

Further, the input interface may include a microphone. A user's voice command may be obtained through the microphone. The microphone may convert a user's voice command into an electrical signal and transmit the electrical signal to the indoor unit controller. The indoor unit controller may control components of the air conditioner to execute a function corresponding to the user's voice command. The setting data obtained through the input interface (e.g., desired indoor temperature, cooling/ heating/ dehumidifying/air cleaning operation mode setting, outlet selection setting, and /or air volume setting) may be transmitted to the indoor unit controller to be described in greater detail below. For example, the setting data obtained through the input interface may be transmitted to the outside, that is, to the outdoor unit or a server through an indoor unit communication circuitry to be described in greater detail below.

The indoor unit of the air conditioner may include a power module including various circuitry. The power module may be connected to an external power source to supply power to components of the indoor unit.

The indoor unit of the air conditioner may include an indoor unit sensor. The indoor unit sensor may be an environment sensor disposed inside or outside the housing. For example, the indoor unit sensor may include one or more temperature sensors and/or humidity sensors disposed in a predetermined space inside or outside the housing of the indoor unit. For example, the indoor unit sensor may include a refrigerant temperature sensor configured to detect a refrigerant temperature of a refrigerant pipe passing through the indoor unit. For example, the indoor unit sensor may include a refrigerant temperature sensor configured to detect a temperature of an entrance, a middle portion and/or an exit of the refrigerant pipe passing through the indoor heat exchanger.

For example, each environmental information detected by the indoor unit sensor may be transmitted to the indoor unit controller to be described below or transmitted to the outside through the indoor unit communication circuitry to be described below.

The indoor unit of the air conditioner may include the indoor unit communication circuitry. The indoor unit communication circuitry may include at least one of a short-range wireless communication module and a long-range wireless communication module. The indoor unit communication circuitry may include at least one antenna for wirelessly communicating with other devices. The outdoor unit may include the outdoor unit communication circuitry. The outdoor unit communication circuitry may also include at least one of a short-range wireless communication module and a long-range wireless communication module.

The short-range wireless communication module may include a Bluetooth communication module, a Bluetooth Low Energy (BLE) communication module, a near field communication module, a WLAN (Wi-Fi) communication module, and a Zigbee communication module, an infrared data association (IrDA) communication module, a Wi-Fi Direct (WFD) communication module, an ultrawideband (UWB) communication module, an Ant+ communication module, a microwave (uWave) communication module, etc., but is not limited thereto.

The long-range wireless communication module may include a communication module that performs various types of long-range wireless communication, and may include a mobile communication circuitry. The mobile communication circuitry transmits and receives radio signals with at least one of a base station, an external terminal, and a server on a mobile communication network.

The indoor unit communication circuitry may communicate with an external device such as a server, a mobile device and other home appliances through an access point (AP). The access point (AP) may connect a local area network (LAN), to which an air conditioner or a user device is connected, to a wide area network (WAN) to which a server is connected. The air conditioner or the user device may be connected to the server through the wide area network (WAN). The indoor unit of the air conditioner may include the indoor unit controller configured to control components of the indoor unit including the blower. The outdoor unit of the air conditioner may include an outdoor unit controller configured to control components of the outdoor unit including the compressor. The indoor unit controller may communicate with the outdoor unit controller through the indoor unit communication circuitry and the outdoor unit communication circuitry. The outdoor unit communication circuitry may transmit a control signal generated by the outdoor unit controller to the indoor unit communication circuitry, or transmit a control signal, which is transmitted from the indoor unit communication circuitry, to the outdoor unit controller. In other words, the outdoor unit and the indoor unit may perform bi-directional communication. The outdoor unit and the indoor unit may transmit and receive various signals generated during operation of the air conditioner.

The outdoor unit controller may be electrically connected to components of the outdoor unit and may control operations of each component. For example, the outdoor unit controller may adjust a frequency of the compressor and control the flow path switching valve to change a circulation direction of the refrigerant. The outdoor unit controller may adjust a rotational speed of the outdoor fan. Further, the outdoor unit controller may generate a control signal for adjusting the opening degree of the expansion valve. Under the control of the outdoor unit controller, the refrigerant may be circulated along the refrigerant circulation circuit including the compressor, the flow path switching valve, the outdoor heat exchanger, the expansion valve, and the indoor heat exchanger.

Various temperature sensors included in the outdoor unit and the indoor unit may transmit electrical signals corresponding to detected temperatures to the outdoor unit controller and/or the indoor unit controller. For example, the humidity sensors included in the outdoor unit and the indoor unit may respectively transmit electrical signals corresponding to the detected humidity to the outdoor unit controller and/or the indoor unit controller.

The indoor unit controller may obtain a user input from a user device including a mobile device through the indoor unit communication circuitry, or directly obtain a user input through the input interface or the remote controller. The indoor unit controller may control components of the indoor unit including the blower in response to the received user input. The indoor unit controller may transmit information related to the received user input to the outdoor unit controller of the outdoor unit.

The outdoor unit controller may control components of the outdoor unit including the compressor based on the information related to the user input received from the indoor unit. For example, when a control signal corresponding to a user input for selecting an operation mode such as a cooling operation, a heating operation, a fan operation, a defrosting operation, or a dehumidifying operation is received from the indoor unit, the outdoor unit controller may control components of the outdoor unit to perform an operation of the air conditioner corresponding to the selected operation mode.

The outdoor unit controller and indoor unit controller may include a processor and a memory, respectively. The indoor unit controller may include at least one first processor and at least one first memory, and the outdoor unit controller may include at least one second processor and at least one second memory.

The memory may memorize/store various types of information necessary for the operation of the air conditioner. The memory may store instructions, applications, data and/or programs necessary for the operation of the air conditioner. For example, the memory may store various programs for the cooling operation, the heating operation, the dehumidifying operation, and /or the defrosting operation of the air conditioner. The memory may include volatile memory such as a static random access memory (S-RAM) and a dynamic random access memory (D-RAM) for temporarily storing data. In addition, the memory may include a non-volatile memory such as a read only memory (ROM), an erasable programmable read only memory (EPROM), and an electrically erasable programmable read only memory (EEPROM) for long-term storage of data.

The processor may include various processing circuitry and generate a control signal for controlling an operation of the air conditioner based on instructions, applications, data, and/or programs stored in the memory. The processor may be hardware and may include a logic circuit and an arithmetic circuit. The processor may process data according to a program and/or instructions provided from the memory, and may generate a control signal according to a processing result. The memory and the processor may be implemented as one control circuit or as a plurality of circuits. The processor according to an embodiment of the disclosure may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The indoor unit of the air conditioner may include an output interface. The output interface may be electrically connected to the indoor unit controller, and output information related to the operation of the air conditioner under the control of the indoor unit controller. For example, the output interface may output information such as an operation mode selected by a user input, a wind direction, a wind volume, and a temperature. Further, the output interface may output sensing information obtained from the indoor unit sensor or the outdoor unit sensor, and output warning /error messages.

The output interfaces may include a display and a speaker. The speaker may be a sound device and configured to output various sounds. The display may display information, which is input by a user or provided to a user, as various graphic elements. For example, operation information of the air conditioner may be displayed as at least one of an image and text. Further, the display may include an indicator providing specific information. The display may include a liquid crystal display (LCD) panel, a light emitting diode (LED) panel, an organic light emitting diode (OLED) panel, a micro-LED panel, and/or a plurality of LEDs.

Hereinafter various example embodiments of the present disclosure will be described in greater detail with reference to the accompanying drawings.

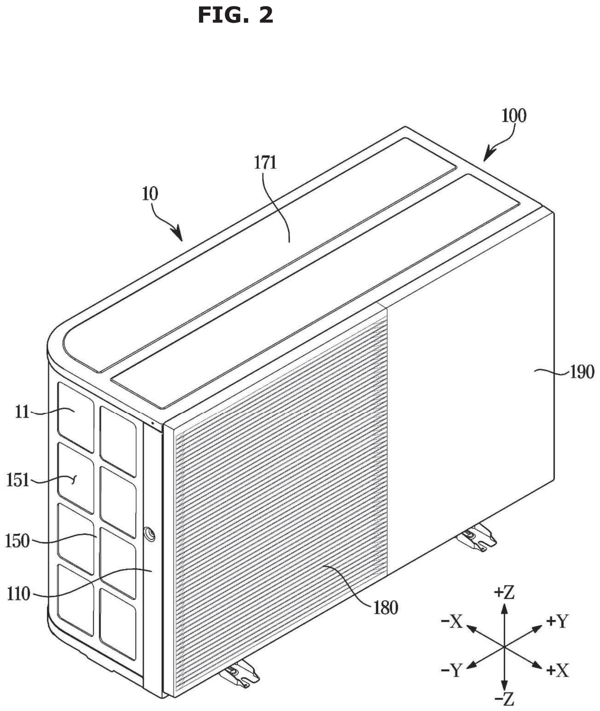

The terms "upward," "downward," "forward," "rearward," etc. used in the following description are based on the drawings, and the shape and location of each component are not limited by these terms. For example, when referring to FIG. 2, a direction in which a first front cover 180 and a second front cover 190 each face in an outdoor unit 10 of an air conditioner 1 according to an embodiment of the present disclosure may be defined as forward (+X direction), and a direction opposite to the forward may be defined as rearward (-X direction). Further, a vertical direction in which a top cover 171 of the outdoor unit 10 of the air conditioner 1 faces may be defined as upward (+Z direction) and a direction opposite to the upward may be defined as downward (-Z direction). Further, a direction in which a first side frame 150 is positioned in the outdoor unit 10 of the air conditioner 1 may be defined as left direction (-Y direction), and a direction opposite to the left direction may be defined as right direction (+Y direction).

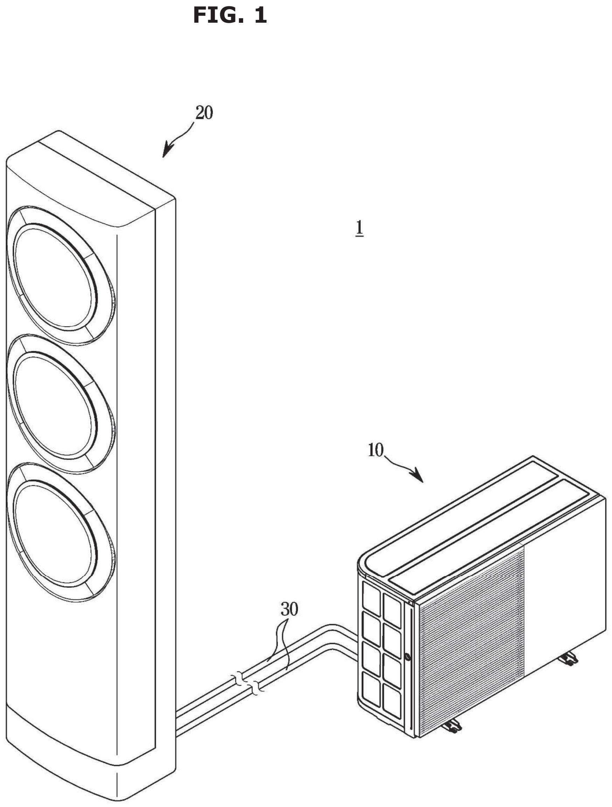

FIG. 1 is a diagram illustrating an example air conditioner according to various embodiments.

Referring to FIG. 1, the air conditioner 1 according to an embodiment of the present disclosure may include an indoor unit 20 disposed in an indoor space and the outdoor unit 10 disposed in an outdoor space.

In order to cool an air conditioning space that is subject to air conditioning, the air conditioner 1 may absorb heat from an inside of the air conditioning space and emit heat to an outside of the air conditioning space. Further, in order to heat the air conditioning space, the air conditioner 1 may absorb heat from the outside of the air conditioning space and emit heat to the inside of the air conditioning space.

On the outside of the air conditioning space, the outdoor unit 10 may exchange heat with outdoor air. The outdoor unit 10 may perform heat exchange between a refrigerant and outdoor air using a phase change (e.g., evaporation or condensation) of the refrigerant. For example, the outdoor unit 10 may emit heat from the refrigerant to the outdoor air using the condensation of the refrigerant. Additionally, the outdoor unit 10 may absorb heat from outdoor air into the refrigerant using the evaporation of the refrigerant.

FIG. 1 illustrates a single outdoor unit 10, but the number of outdoor units 10 is not limited to that shown in FIG. 1. For example, the air conditioner 1 may include a plurality of outdoor units.

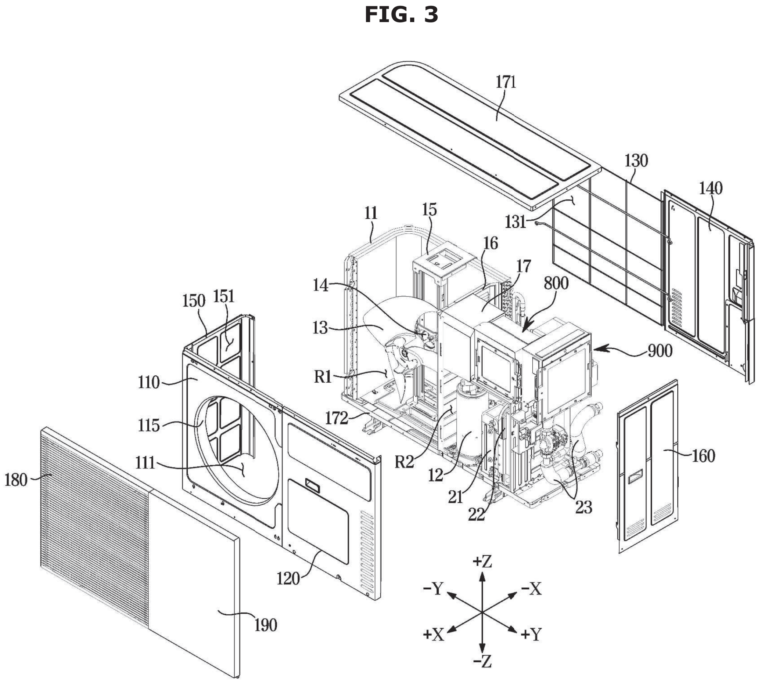

The outdoor unit 10 may include an outdoor heat exchanger 11 (refer to FIG. 3) configured to exchange heat with outdoor air, and a compressor 12 (refer to FIG. 3) configured to compress refrigerant gas.

A configuration of the outdoor unit 10 will be described in greater detail below.

The indoor unit 20 may exchange heat with indoor air within the air conditioning space. The indoor unit 20 may perform heat exchange between the refrigerant and indoor air using a phase change (e.g., evaporation or condensation) of the refrigerant. For example, the indoor unit 20 may cool the air conditioning space by absorbing heat from indoor air into the refrigerant using the evaporation of the refrigerant. Further, the indoor unit 20 may heat the air conditioning space by discharging heat from the refrigerant to the indoor air using the condensation of the refrigerant.

The indoor unit 20 may include an indoor heat exchanger configured to exchange heat with indoor air, an indoor blower fan configured to draw and blow indoor air to allow the indoor air to pass through the indoor heat exchanger, and an expansion valve unit configured to decompress and expand the refrigerant.

FIG.1 illustrates a single indoor unit 20, but the number of indoor units 20 is not limited to that shown in FIG. 1. For example, the air conditioner 1 may include a plurality of indoor units. A plurality of different indoor units may be respectively installed in a plurality of different air conditioning spaces.

As mentioned above, the air conditioner 1 may perform the heat exchange between the refrigerant and outdoor air on the outside of the air conditioning space and perform the heat exchange between the refrigerant and indoor air within the air conditioning space.

The air conditioner 1 may include a refrigerant pipe 30 provided to transfer the refrigerant between the indoor unit 20 and the outdoor unit 10 in order to move heat between the outside of the air conditioning space and the inside of the air conditioning space. The refrigerant pipe 30 may move the refrigerant between the outside of the air conditioning space and the inside of the air conditioning space. The indoor unit 20 and the outdoor unit 10 may be connected to each other through the refrigerant pipe 30 provided to transfer the refrigerant.

The above-mentioned air conditioner 1 is merely an example of the air conditioner to which the outdoor unit of the air conditioner according to the present disclosure is applied, but the present disclosure is not limited thereto. The configuration of the air conditioner to which the outdoor unit of the air conditioner according to the present disclosure is applied, the indoor unit included therein, the refrigerant pipe, etc. may vary.

Hereinafter the outdoor unit 10 of the air conditioner 1 according to an embodiment of the present disclosure will be described in greater detail with reference to FIGS. 2 to 15.

FIG. 2 is a perspective view illustrating an outdoor unit of the air conditioner according to various embodiments. FIG. 3 is an exploded perspective view of the outdoor unit of the air conditioner according to various embodiments.

Referring to FIGS. 2 and 3, the outdoor unit 10 of the air conditioner 1 according to an embodiment of the present disclosure may include the outdoor heat exchanger 11 configured to exchange heat with outdoor air, the compressor 12 configured to compress a refrigerant, an outdoor fan 13 configured to draw and blow outdoor air to allow the outdoor air to pass through the outdoor heat exchanger 11, and a housing 100 provided to form an exterior of the outdoor unit 10.

The housing 100 may form the exterior of the outdoor unit 10. Various components of the outdoor unit 10, such as the outdoor heat exchanger 11, the compressor 12, the outdoor fan 13, and control boxes 800 and 900 to be described below, may be accommodated inside the housing 100.

The housing 100 may include inlets 131 and 151 through which air flows in and an outlet 111 through which air flows out. As the outdoor fan 13 rotates, air outside the housing 100 may be introduced through the inlets 131 and 151, and after exchanging heat with the outdoor heat exchanger 11, the air may be discharged to the outside of the housing 100 through the outlet 111.

The outdoor unit 10 may include a heat exchange room R1 formed inside the housing 100. Outside air may be introduced into the heat exchange room R1, and the introduced air may be discharged to the outside again. In the heat exchange room R1, heat exchange may occur between the outdoor heat exchanger 11 and air introduced from the outside. Components such as the outdoor heat exchanger 11 and the outdoor fan 13 may be disposed in the heat exchange room R1.

The outdoor unit 10 may include a machine room R2 formed inside the housing 100. Components such as the compressor 12 and the control boxes 800 and 900, which will be described below, may be disposed in the machine room R2.

In the housing 100, the heat exchange room R1 and the machine room R2 may be partitioned from each other. The outdoor unit 10 may include a partition 16 provided to define the heat exchange room R1 and the machine room R2. The partition 16 may be disposed between the heat exchange room R1 and the machine room R2. For example, the heat exchange room R1 and the machine room R2 may be arranged in the left and right directions (Y direction) in the drawing, and the partition 16 may be arranged to extend in the front and rear direction (X direction) and in the up and down direction (Z direction) in the drawing, so as to define the heat exchange room R1 and machine room R2.

The partition 16 may be coupled to the housing 100. For example, the partition 16 may be coupled to a base 172, which will be described below. For example, the partition 16 may be coupled to the front frames 110 and 120, which will be described below. Alternatively, the partition 16 may be formed integrally with some components of the housing 100.

For example, the housing 100 may be formed to have a substantially box shape.

Hereinafter an example of a structure of the housing 100 will be described in greater detail.

The housing 100 may include a first front frame 110. The first front frame 110 may cover the front (+X direction) of the heat exchange room R1. The outlet 111 may be formed in the first front frame 110.

For example, the first front frame 110 may include a bell mouth 115 provided to guide a flow of air discharged through the outlet 111. The bell mouth 115 may be provided along a circumference of the outlet 111. The bell mouth 115 may be formed in a substantially cylindrical shape. The bell mouth 115 may extend toward the inside of the housing 100. The bell mouth 115 may extend rearward (-X direction) from a flat plate-shaped portion of the first front frame 110.

For example, the first front frame 110 including the bell mouth 115 may be formed as one piece.

For example, the first front frame 110 may include a metal material. For example, the first front frame 110 may include a soft metal material, and the bell mouth 115 of the first front frame 110 may be formed through a drawing process of a soft metal material.

A detailed description of the structure of the first front frame 110 will be described below.

The housing 100 may include a second front frame 120. The second front frame 120 may cover the front (+X direction) of the machine room R2. For example, the second front frame 120 may be formed in a substantially flat plate shape.

For example, the first front frame 110 and the second front frame 120 may be arranged side by side in the left and right direction (Y direction). The first front frame 110 and the second front frame 120 may be coupled to each other.

For example, a plurality of heat dissipation holes may be formed in the second front frame 120 to allow the machine room R2 to communicate with the outside of the outdoor unit 10 so as to dissipate heat from the machine room R2.

The housing 100 may include a first rear frame 130. The first rear frame 130 may form a part of a rear exterior of the outdoor unit 10. The first rear frame 130 may be disposed at the rear (-X direction) of the heat exchange room R1. The inlet 131 may be formed in the first rear frame 130.

The first front frame 110 and the first rear frame 130 may be arranged to face each other.

The housing 100 may include a second rear frame 140. The second rear frame 140 may form another part of the rear exterior of the outdoor unit 10. The second rear frame 140 may cover the rear (-X direction) of the machine room R2.

For example, a plurality of heat dissipation holes may be formed in the second rear frame 140 to allow the machine room R2 to communicate with the outside of the outdoor unit 10 to dissipate heat from the machine room R2.

The second front frame 120 and the second rear frame 140 may be arranged to face each other.

The housing 100 may include the first side frame 150. The first side frame 150 may form one surface of the outdoor unit 10 in the left direction (-Y direction).

The first side frame 150 may cover the heat exchange room R1. The first side frame 150 may cover the heat exchange room R1 from the left direction (-Y direction). The inlet 151 may be formed in the first side frame 150.

The first side frame 150 may be coupled to the first front frame 110. The first side frame 150 may be connected to the first rear frame 130.

For example, the first side frame 150 may be arranged to extend in the front and rear direction (X direction).

The housing 100 may include a second side frame 160. The second side frame 160 may form one surface of the outdoor unit 10 in the right direction (+Y direction).

The second side frame 160 may cover the machine room R2. The second side frame 160 may cover the machine room R2 from the right direction (+Y direction).

For example, a plurality of heat dissipation holes may be formed in the second side frame 160 to allow the machine room R2 to communicate with the outside of the outdoor unit 10 so as to dissipate heat from the machine room R2.

The second side frame 160 may be coupled to the second front frame 120. The second side frame 160 may be coupled to the second rear frame 140.

For example, the second side frame 160 may be arranged to extend in the front and rear direction (X direction).

The first side frame 150 and the second side frame 160 may be disposed to face each other.

The housing 100 may include the base 172. The base 172 may form a lower surface of the outdoor unit 10. The base 172 may be disposed on one side of the heat exchange room R1 and the machine room R2 with respect to the lower side (-Z direction). The base 172 may support various components of the outdoor unit 10 accommodated inside the housing 100 from the lower side. For example, the base 172 may support components such as the outdoor heat exchanger 11, the compressor 12, a motor bracket 15, and the partition 16, from the lower side.

The base 172 may be coupled to a lower portion of each of the first front frame 110, the second front frame 120, the second rear frame 140, the first side frame 150, and the second side frame 160.

The base 172 may be formed to have a substantially flat plate shape.

The housing 100 may include the top cover 171. The top cover 171 may form an upper surface of the outdoor unit 10.

The top cover 171 may cover an upper side (+Z direction) of the heat exchange room R1 and the machine room R2. The top cover 171 may cover various components of the outdoor unit 10 accommodated inside the housing 100 from the upper side.

The top cover 171 may be coupled to an upper portion of each of the first front frame 110, the second front frame 120, the second rear frame 140, the first side frame 150, and the second side frame 160.

The top cover 171 may be formed to have a substantially flat plate shape.

The top cover 171 and the base 172 may be arranged to face each other.

The housing 100 may include the first front cover 180. The first front cover 180 may cover the front (+X) of the first front frame 110. The first front cover 180 may cover the front (+X) of the outlet 111. The first front cover 180 may be coupled to the first front frame 110. The first front cover 180 may form a portion of a front exterior of the outdoor unit 10.

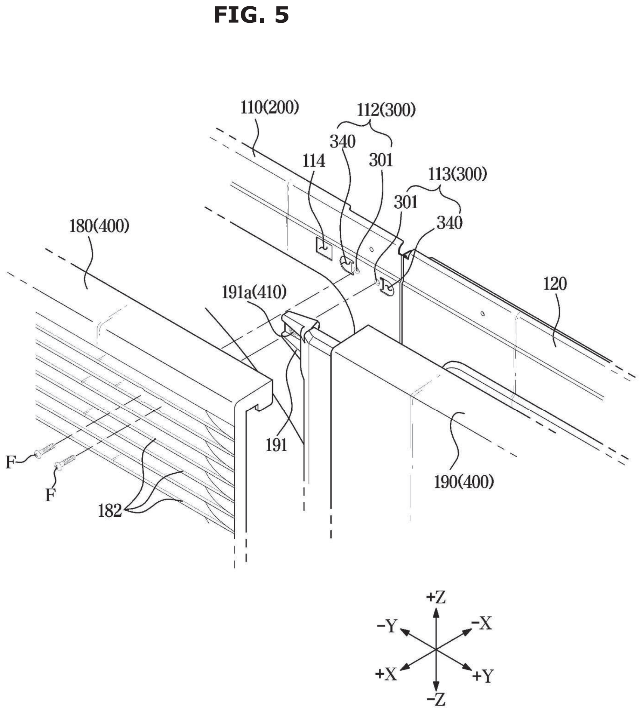

The first front cover 180 may include a grille 182 (refer to FIG. 5) to allow air to be discharged from the outlet 111 while covering the outlet 111.

The housing 100 may include the second front cover 190. The second front cover 190 may cover the front (+X) of the second front frame 120. The second front cover 190 may be coupled to the second front frame 120. Further, the second front cover 190 may be couped to the first front frame 110. The second front cover 190 may form another portion of the front exterior of the outdoor unit 10.

For example, the first front cover 180 and the second front cover 190 may be arranged side by side in the left and right direction (Y direction). The first front cover 180 and the second front cover 190 may be coupled to each other.

A structure of the first front cover 180 and the second front cover 190 will be described in greater detail below.

Components included in the housing 100 may be provided to be separable from each other. For example, the first front cover 180 may be separable from the first front frame 110. For example, the second front cover 190 may be separable from the first front frame 110 and the second front frame 120. For example, the second front frame 120 may be separable from the first front frame 110, the second side frame 160, the top cover 171, and the base 172. For example, the second side frame 160 may be separable from the second front frame 120, the second rear frame 140, the top cover 171, and the base 172. For example, the top cover 171 may be separable from the first front frame 110, the second front frame 120, the second rear frame 140, the first side frame 150, and the second side frame 160.

Accordingly, when it is necessary to perform tasks such as inspecting, replacing, or repairing components in the outdoor unit 10, a worker can perform the tasks by separating at least one component of the housing 100.

The configuration of the housing included in the air conditioner according to the present disclosure is not limited to the above-mentioned description.

The outdoor heat exchanger 11 may be configured to exchange heat with outdoor air. The outdoor heat exchanger 11 may be configured to allow a refrigerant to flow therein. In the outdoor heat exchanger 11, the heat exchange may occur between the refrigerant and the outdoor air.

For example, during a cooling operation of the air conditioner 1, high-pressure and high-temperature refrigerant gas may be condensed in the outdoor heat exchanger 11, and while the refrigerant is condensed, the refrigerant may emit heat to the outdoor air. During the cooling operation of the air conditioner 1, the outdoor heat exchanger 11 may discharge a refrigerant liquid.

In addition, during a heating operation of the air conditioner 1, low-temperature and low-pressure refrigerant liquid may be evaporated in the outdoor heat exchanger 11, and while the refrigerant is evaporated, the refrigerant may absorb heat from the outdoor air. During the heating operation of the air conditioner 1, the outdoor heat exchanger 11 may discharge refrigerant gas.

In the heat exchange room R1, the outdoor heat exchanger 11 may be arranged to face the inlets 131 and 151.

The compressor 12 may compress refrigerant gas and discharge high-temperature and high-pressure refrigerant gas. For example, the compressor 12 may include a motor and a compression mechanism, and the compression mechanism may compress the refrigerant gas by a torque of the motor.

The outdoor unit 10 may include the outdoor fan 13 configured to move air, and a fan motor 14 configured to generate a rotational force to rotate the outdoor fan 13.

For example, the outdoor unit 10 may include the motor bracket 15 provided to support the outdoor fan 13 and the fan motor 14. The motor bracket 15 may be disposed in the heat exchange room R1.

For example, the outdoor unit 10 may include a plate heat exchanger 21. The plate heat exchanger 21 may be configured to exchange heat between the refrigerant and water. The plate heat exchanger 21 may be disposed inside the housing 100. For example, the plate heat exchanger 21 may be disposed in the machine room R2.

For example, the outdoor unit 10 may include a water pipe 23 provided to allow water to be introduced from the outside or discharged to the outside. The water pipe 23 may be connected to the plate heat exchanger 21. At least a portion of the water pipe 23 may be disposed inside the housing 100. For example, at least a portion of the water pipe 23 may be disposed in the machine room R2.

Water that is introduced from the outside through the water pipe 23 may exchange heat with a high-temperature refrigerant within the plate heat exchanger 21. In the plate heat exchanger 21, water may absorb heat from the high-temperature refrigerant and transfer the heat back to the outside of the outdoor unit 10 through the water pipe 23.

For example, the outdoor unit 10 may include an expansion tank 22. When the water temperature rises due to the plate heat exchanger 21, a volume of the water within the water pipe 23 may increase, and the expansion tank 22 may be provided to prevent and/or reduce the sudden increase in the water pressure. The expansion tank 22 may be disposed inside the housing 100. For example, the expansion tank 22 may be disposed in the machine room R2.

As mentioned above, the outdoor unit 10 according to an embodiment may include the plate heat exchanger 21, the water pipe 23, and the expansion tank 22, thereby forming a part of a heating system configured to supply hot water.

However, the present disclosure is not limited thereto, and in the air conditioner according to an embodiment, the plate heat exchanger, the water pipe, and the expansion tank may be disposed outside the outdoor unit. The air conditioner according to an embodiment may not be equipped with the heating system.

The outdoor unit 10 may include a plurality of printed circuit boards (PCBs) for controlling the operation of various components of the outdoor unit 10. Various electronic components may be mounted on the plurality of printed circuit boards. The outdoor unit 10 may include the control boxes 800 and 900 provided to accommodate the plurality of printed circuit boards.

For example, the outdoor unit 10 may include a first control box 800. The first control box 800 may be accommodated inside the housing 100. For example, the first control box 800 may be disposed in the machine room R2.

As illustrated in FIG. 3, the first control box 800 may be positioned in the front portion of the machine room R2 and may be covered by the second front frame 120.

For example, the outdoor unit 10 may include a second control box 900. The second control box 900 may be accommodated inside the housing 100. For example, the second control box 900 may be disposed in the machine room R2.

As illustrated in FIG. 3, the second control box 900 may be positioned on a right portion of the machine room R2 and may be covered by the second side frame 160.

For example, the outdoor unit 10 may include a duct 17. The duct 17 may be provided to allow an inside of the first control box 800 to communicate with the heat exchange room R1. The duct 17 may be provided to allow an inside of the second control box 900 to communicate with the heat exchange room R1.

When the outdoor fan 13 is driven, the air inside the machine room R2 may flow into the heat exchange room R1 through the duct 17 due to the suction force of the outdoor fan 13. Accordingly, the refrigerant gas that leaks from a component inside the outdoor unit 10 and then flows into the control boxes 800 and 900 may move to the heat exchange chamber R1 through the duct 17. In addition, heat generated inside the control boxes 800 and 900 may be discharged to the heat exchange chamber R1 through the duct 17.

The configuration of the outdoor unit 10 described above is only an example of the outdoor unit of the air conditioner according to the present disclosure, and the present disclosure is not limited thereto. The outdoor unit of the air conditioner according to the present disclosure may be configured in various ways to allow outside air to be introduced through the inlet and to allow the introduced air to be discharged to the outside after the heat exchange.

As described above, the outdoor unit 10 may include various components. Each component of the outdoor unit 10 may be supported, coupled to, or fixed to each other by various structures. For example, each component of the outdoor unit 10 may be fixed to each other by a structure in which components are fastened by fastening members such as screws. In this case, each component of the outdoor unit 10 fixed to each other may be separated from each other by releasing the fastening member.

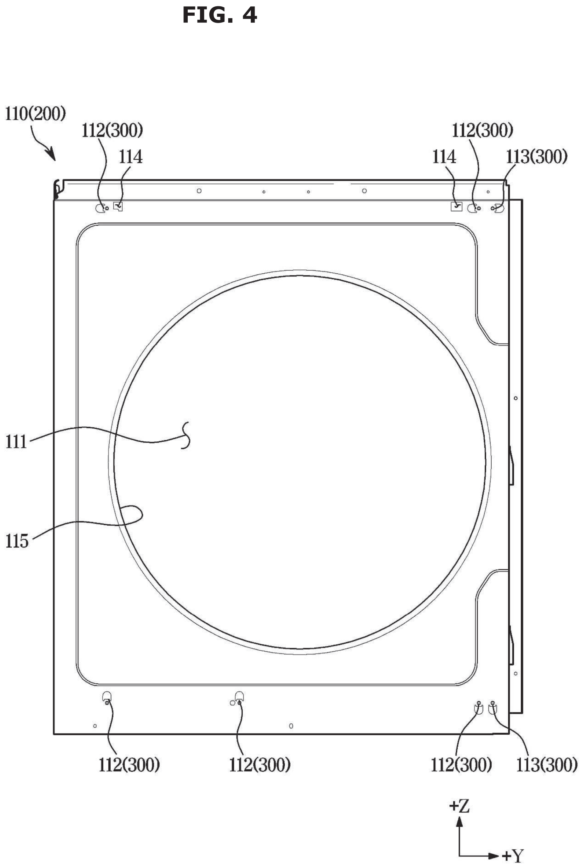

Hereinafter an example structure for fixing some components of the outdoor unit 10 to each other will be described in greater detail with reference to FIGS. 4 to 25.

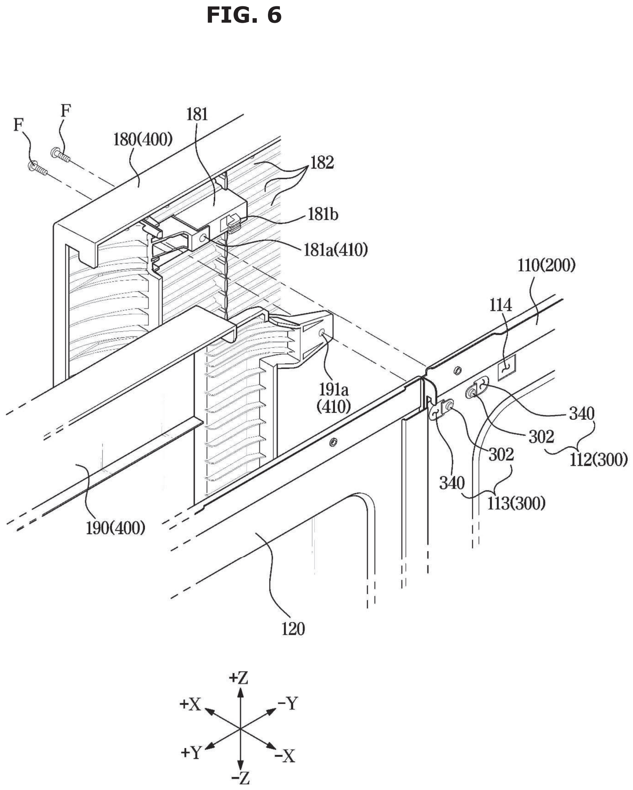

FIG. 4 is a diagram illustrating an example front frame of the outdoor unit of the air conditioner according to various embodiments. FIG. 5 is a partial exploded perspective view illustrating a coupling relationship between various components of a housing included in the outdoor unit of the air conditioner according to various embodiments. FIG. 6 is a partial exploded perspective view illustrating a coupling relationship between various components of the housing included in the outdoor unit of the air conditioner according to various embodiments.

Referring to FIGS. 4, 5 and 6 (which may be referred to as FIGS. 4 to 6), some of the components of the housing 100 in the outdoor unit 10 of the air conditioner 1 according to an embodiment of the present disclosure may be fixed to each other by a fastening member (e.g., fastener) F. For example, as shown, the fastening member F may, as an example of a fastener, include a screw.

Various components of the housing 100 may be fixed by being fastened to each other by the fastening member F, and may be separated from each other by releasing the fastening member F.

For example, as shown in FIGS. 4 to 6, the first front frame 110 and the first front cover 180 may be fixed to each other by the fastening member F. The first front cover 180 may be fixed to the first front frame 110 by the fastening member F. The first front frame 110 and the first front cover 180 may be fixed to each other by fastening the fastening member F, and may be separated from each other by releasing the fastening member F.

The first front cover 180 may be coupled to one surface of the first front frame 110. For example, the first front cover 180 may be coupled to one surface (hereinafter referred to as the front surface) on the front (+X direction) of the first front frame 110. The front surface of the first front frame 110 may be one surface of the first front frame 110 facing the outside of the outdoor unit 10.

For example, the first front frame 110 may include a first fixing portion 112. The first fixing portion 112 may be provided to fix the first front cover 180 to the first front frame 110. The first front cover 180 may be fixed to the first fixing portion 112 by a fastening member F. The fastening member F may fix the first front cover 180 to the first front frame 110 by being coupled to the first fixing portion 112. The fastening member F may allow the first front cover 180 to be separated from the first front frame 110 by being separated from the first fixing portion 112.

For example, as shown in FIG. 4, the first fixing portion 112 may be formed at a position adjacent to an edge portion of the first front frame 110. For example, the first fixing portion 112 may be provided in plurality, and some of the plurality of first fixing portions 112 may be positioned adjacent to an upper edge portion of the first front frame 110, and others of the first fixing portions 112 may be positioned adjacent to a lower edge portion of the first front frame 110. However, the position, at which the first fixing portion 112 is formed on the first front frame 110, and the number of first fixing portions 112 formed on the first front frame 110 are not limited to those shown in FIG. 4.

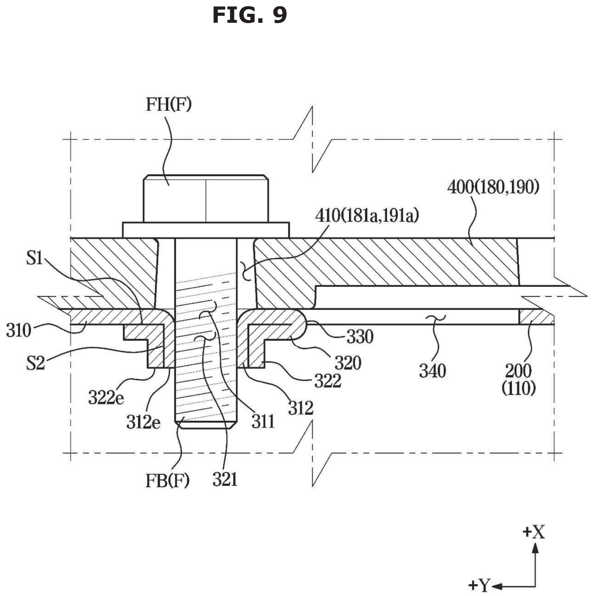

The first fixing portion 112 may include a burring hole 301. The burring hole 301 of the first fixing portion 112 may be provided to allow the fastening member F to pass therethrough. The burring hole 301 of the first fixing portion 112 may be formed to be penetrated by the fastening member F. The burring hole 301 of the first fixing portion 112 may be formed to allow both sides of the first fixing portion 112 in the front and rear direction (X direction) to be penetrated. The burring hole 301 of the first fixing portion 112 may have a diameter large enough to allow the fastening member F to pass therethrough. For example, the diameter of the burring hole 301 of the first fixing portion 112 may approximately correspond to a diameter of the fastening member F (particularly, a diameter of a body portion FB of the fastening member F (refer to FIG. 9)). However, the diameter of the burring hole 301 of the first fixing portion 112 may be less than the diameter of a head portion FH (refer to FIG. 9) of the fastening member F.

The first front cover 180 may include a first frame coupling portion 181 provided to be coupled to the first front frame 110. The first front cover 180 may be fixed to the first fixing portion 112 of the first front frame 110 by the first frame coupling portion 181. The fastening member F may fix the first front cover 180 to the first front frame 110 by being coupled to the first frame coupling portion 181. The fastening member F may allow the first front cover 180 to be separated from the first front frame 110 by being separated from the first frame coupling portion 181.

For example, the first frame coupling portion 181 may include a first cover hole 181a. The first cover hole 181a may be provided to allow the fastening member F to pass therethrough. The first cover hole 181a may be formed to be penetrated by the fastening member F. The first cover hole 181a may be formed to allow both sides of the first frame coupling portion 181 in the front and rear direction (X direction) to be penetrated. The first cover hole 181a may have a diameter large enough to allow the fastening member F to pass therethrough. For example, the diameter of the first cover hole 181a may approximately correspond to the diameter of the fastening member F (particularly, the diameter of the body portion FB of the fastening member F (refer to FIG. 9)). However, the diameter of the first cover hole 181a may be less than the diameter of the head portion FH (refer to FIG. 9) of the fastening member F.

The burring hole 301 of the first fixing portion 112 and the first cover hole 181a may be disposed at positions corresponding to each other when the first front frame 110 and the first front cover 180 are fixed to each other. For example, when the first front frame 110 and the first front cover 180 are fixed to each other, the burring hole 301 of the first fixing portion 112 and the first cover hole 181a may be arranged side by side in the front and rear direction X. Particularly, when the first front frame 110 and the first front cover 180 are fixed to each other, the first cover hole 181a may be positioned in front (+X direction) of the burring hole 301 of the first fixing portion 112.

With this structure, the first front frame 110 and the first front cover 180 may be fastened and fixed to each other by the fastening member F penetrating the first cover hole 181a and the burring hole 301 of the first fixing portion 112. For example, in a state in which the fastening member F is disposed to sequentially penetrate the first cover hole 181a and the burring hole 301 of the first fixing portion 112, the fastening member F may fix the first front frame 110 and the first front cover 180 to each other. That the fastening member F sequentially penetrates the first cover hole 181a and the burring hole 301 of the first fixing portion 112 may refer, for example, to the body portion FB (refer to FIG. 9) of the fastening member F firstly penetrating the first cover hole 181a and then penetrating the burring hole 301 of the first fixing portion 112. The first cover hole 181a may be positioned between the head portion FH (refer to FIG. 9) of the fastening member F and the burring hole 301 of the first fixing portion 112.

After the fastening member F sequentially penetrates the burring hole 301 of the first fixing portion 112, and the first cover hole 181a arranged side by side in one direction, the fastening member F may fasten the first front frame 110 and the first front cover 180. For example, in the state in which the burring hole 301 of the first fixing portion 112 and the first cover hole 181a are arranged side by side in the front and rear direction X, the fastening member F may fasten the first front frame 110 and the first front cover 180 while penetrating the burring hole 301 of the first fixing portion 112, and the first cover hole 181a in the front and rear direction (+X direction).

The first front frame 110 may be formed to have a thin and flat plate shape, and thus it may be required to include a structure provided to allow the fastening member F to be stably supported when the fastening member F penetrates the first front frame 110. Further, when the operation of fastening the fastening member F to the first front frame 110 or releasing the fastening member F is repeated, a portion (e.g., a portion forming the burring hole 301), to which the fastening member F is fastened, on the first front frame 110 may be worn off, and thus a structure provided to prevent and/or inhibit the portion, to which the fastening member F is fastened, from being worn off and to reinforce a rigidity of the portion may be required.

Accordingly, the first fixing portion 112 may include a burring flange 302 provided along a circumference of the burring hole 301. The burring flange 302 of the first fixing portion 112 may extend from the burring hole 301 to a direction in which the fastening member F penetrates the burring hole 301. The burring flange 302 of the first fixing portion 112 may protrude from a flat portion of the first fixing portion 112 to a direction away from the first front cover 180. For example, the burring flange 302 of the first fixing portion 112 may be provided along the circumference of the burring hole 301 and protrude rearward (-X direction) from the flat portion of the first fixing portion 112.

For example, the burring hole 301 of the first fixing portion 112 may have a substantially circular shape. The burring flange 302 of the first fixing portion 112 may have a cylindrical shape with a hollow corresponding to the burring hole 301.

The burring flange 302 of the first fixing portion 112 may be provided to support the fastening member F penetrating the burring hole 301. The fastening member F may be supported by the burring flange 302 as an outer circumferential surface of the body portion FB (refer to FIG. 9) of the fastening member F is in contact with an inner circumferential surface of the burring flange 302 of the first fixing portion 112.

With this configuration, the rigidity of the first fixing portion 112 may be reinforced, the fastening member F may be stably supported by the first fixing portion 112, and the first front cover 180 may be stably fixed to the first front frame 110.

For example, a screw thread may be formed on the inner circumferential surface of the burring flange 302 of the first fixing portion 112. For example, the screw thread formed on the inner circumferential surface of the burring flange 302 may be formed in a spiral shape extending along longitudinal and circumferential directions of the burring flange 302. As shown in FIG. 9, a screw thread having a shape corresponding to the screw thread of the burring flange 302 may be formed on the body portion FB of the fastening member F, and the fastening member F may be coupled to the first fixing portion 112 or separated from the first fixing portion 112 while the fastening member F moves along the screw thread of the burring flange 302.

As shown in FIGS. 4 to 6, the first front frame 110 and the second front cover 190 may be fixed to each other by a fastening member F. The second front cover 190 may be fixed to the first front frame 110 by the fastening member F. The first front frame 110 and the second front cover 190 may be fixed to each other by fastening the fastening member F, and may be separated from each other by releasing the fastening member F.

The second front cover 190 may be coupled to one surface of the first front frame 110. For example, the second front cover 190 may be coupled to the front surface of the first front frame 110.

For example, the first front frame 110 may include a second fixing portion 113. The second fixing portion 113 may be provided to fix the second front cover 190 to the first front frame 110. The second front cover 190 may be fixed to the second fixing portion 113 by a fastening member F. The fastening member F may fix the second front cover 190 to the first front frame 110 by being coupled to the second fixing portion 113. The fastening member F may allow the second front cover 190 to be separated from the first front frame 110 by being separated from the second fixing portion 113.

For example, as shown in FIG. 4, the second fixing portion 113 may be formed at a position adjacent to the edge portion of the first front frame 110. Particularly, the second fixing portion 113 may be positioned at a position adjacent to the edge portion (e.g., the right (+Y direction side) edge portion) of the first front frame 110 adjacent to the second front cover 190. For example, the second fixing portion 113 may be provided in plurality, and some of the plurality of second fixing portions 113 may be positioned adjacent to the upper portion of the right edge portion of the first front frame 110, and others of the second fixing portions 113 may be positioned adjacent to the lower portion of the right edge portion of the first front frame 110. Further, the second fixing portion 113 may be positioned in the right direction (+Y direction) closer to the second front cover 190 than the first fixing portion 112. However, the position, at which the second fixing portion 113 is formed on the first front frame 110, and the number of second fixing portions 113 formed on the first front frame 110 are not limited to those shown in FIG. 4.

The second fixing portion 113 may include a burring hole 301. The burring hole 301 of the second fixing portion 113 may be provided to allow the fastening member F to pass therethrough. The burring hole 301 of the second fixing portion 113 may be formed to be penetrated by the fastening member F. The burring hole 301 of the second fixing portion 113 may be formed to allow both sides of the second fixing portion 113 in the front and rear direction (X direction) to be penetrated. The burring hole 301 of the second fixing portion 113 may have a diameter large enough to allow the fastening member F to pass therethrough. For example, the diameter of the burring hole 301 of the second fixing portion 113 may approximately correspond to a diameter of the fastening member F (particularly, a diameter of a body portion FB of the fastening member F (refer to FIG. 9)). However, the diameter of the burring hole 301 of the second fixing portion 113 may be less than the diameter of a head portion FH (refer to FIG. 9) of the fastening member F.

The second front cover 190 may include a second frame coupling portion 191 provided to be coupled to the first front frame 110. The second front cover 190 may be fixed to the second fixing portion 113 of the first front frame 110 by the second frame coupling portion 191. The fastening member F may fix the second front cover 190 to the first front frame 110 by being coupled to the second frame coupling portion 191. The fastening member F may allow the second front cover 190 to be separated from the first front frame 110 by being separated from the second frame coupling portion 191.

For example, the second frame coupling portion 191 may include a second cover hole 191a. The second cover hole 191a may be provided to allow the fastening member F to pass therethrough. The second cover hole 191a may be formed to be penetrated by the fastening member F. The second cover hole 191a may be formed to allow both sides of the second frame coupling portion 191 in the front and rear direction (X direction) to be penetrated. The second cover hole 191a may have a diameter large enough to allow the fastening member F to pass therethrough. For example, the diameter of the second cover hole 191a may approximately correspond to the diameter of the fastening member F (for example, the diameter of the body portion FB of the fastening member F (refer to FIG. 9)). However, the diameter of the second cover hole 191a may be less than the diameter of the head portion FH (refer to FIG. 9) of the fastening member F.

The burring hole 301 of the second fixing portion 113 and the second cover hole 191a may be disposed at positions corresponding to each other when the first front frame 110 and the second front cover 190 are fixed to each other. For example, when the first front frame 110 and the second front cover 190 are fixed to each other, the burring hole 301 of the second fixing portion 113 and the second cover hole 191a may be arranged side by side in the front and rear direction X. For example, when the first front frame 110 and the second front cover 190 are fixed to each other, the second cover hole 191a may be positioned in front (+X direction) of the burring hole 301 of the second fixing portion 113.

With this structure, the first front frame 110 and the second front cover 190 may be fastened and fixed to each other by the fastening member F penetrating the second cover hole 191a and the burring hole 301 of the second fixing portion 113. For example, in a state in which the fastening member F is disposed to sequentially penetrate the second cover hole 191a and the burring hole 301 of the second fixing portion 113, the fastening member F may fix the first front frame 110 and the second front cover 190 to each other. That the fastening member F sequentially penetrates the second cover hole 191a and the burring hole 301 of the second fixing portion 113 may refer, for example, to the body portion FB (refer to FIG. 9) of the fastening member F firstly penetrating the second cover hole 191a and then penetrating the burring hole 301 of the second fixing portion 113. At this time, the second cover hole 191a may be positioned between the head portion FH (refer to FIG. 9) of the fastening member F and the burring hole 301 of the second fixing portion 113.

After the fastening member F sequentially penetrates the burring hole 301 of the second fixing portion 113, and the second cover hole 191a arranged side by side in one direction, the fastening member F may fasten the first front frame 110 and the second front cover 190. For example, in the state in which the burring hole 301 of the second fixing portion 113, and the second cover hole 191a are arranged side by side in the front and rear direction X, the fastening member F may fasten the first front frame 110 and the second front cover 190 while penetrating the burring hole 301 of the second fixing portion 113, and the second cover hole 191a in the front and rear direction (+X direction).

Accordingly, the second fixing portion 113 may include a burring flange 302 provided along a circumference of the burring hole 301 in the same manner as the first fixing portion 112 including the burring flange 302. The burring flange 302 of the second fixing portion 113 may extend from the burring hole 301 to a direction in which the fastening member F penetrates the burring hole 301. The burring flange 302 of the second fixing portion 113 may protrude from a flat portion of the second fixing portion 113 to a direction away from the second front cover 190. For example, the burring flange 302 of the second fixing portion 113 may be provided along the circumference of the burring hole 301 and protrude rearward (-X direction) from the flat portion of the second fixing portion 113.

For example, the burring hole 301 of the second fixing portion 113 may have a substantially circular shape. At this time, the burring flange 302 of the second fixing portion 113 may have a cylindrical shape with a hollow corresponding to the burring hole 301.

The burring flange 302 of the second fixing portion 113 may be provided to support the fastening member F penetrating the burring hole 301. The fastening member F may be supported by the burring flange 302 as an outer circumferential surface of the body portion FB (refer to FIG. 9) of the fastening member F is in contact with an inner circumferential surface of the burring flange 302 of the second fixing portion 113.

With this configuration, the rigidity of the second fixing portion 113 may be reinforced, the fastening member F may be stably supported by the second fixing portion 113, and the second front cover 190 may be stably fixed to the first front frame 110.

For example, a screw thread may be formed on the inner circumferential surface of the burring flange 302 of the second fixing portion 113. For example, the screw thread formed on the inner circumferential surface of the burring flange 302 may be formed in a spiral shape extending along longitudinal and circumferential directions of the burring flange 302. As shown in FIG. 9, a screw thread having a shape corresponding to the screw thread of the burring flange 302 may be formed on the body portion FB of the fastening member F, and the fastening member F may be coupled to the second fixing portion 113 or separated from the second fixing portion 113 while the fastening member F moves along the screw thread of the burring flange 302.

With this configuration, the first front cover 180 and the second front cover 190 may be fixed to the first front frame 110 by a fastening member F. The first front cover 180 and the second front cover 190 may be separated from the first front frame 110 by releasing the fastening member F.

As well as the above-mentioned components, various components of the outdoor unit 10 may be arranged to be fixed to each other by the fastening member F, and in this case, structures corresponding to the above-mentioned first and second fixing portions 112 and 113 (e.g., the burring hole 301, the burring flange 302, etc.) may be applied to the fixing structures by the fastening member F between each component.

As described above, the burring flange 302 is provided in the fixing structure between the components of the outdoor unit 10 to support the fastening member F and reinforce the rigidity of the fixing portion, but when the fastening member F is repeatedly fastened or released, damage to the fixing portion such as the wear of the inner surface of the burring flange 302, may occur. In this case, it may cause a risk in which the fastening member F is not stably supported by the fixing portion or the fastening member F slips around during the process of fastening or releasing the fastening member F.

The risk may be more apparent when the portion, in which the burring flange 302 is formed, is provided with a thin or soft material. For example, some of the components of the outdoor unit 10 may be formed of thin materials to lighten the overall weight of the product. For example, the first front frame 110 may be formed of a thin and soft metal material to allow the bell mouth 115 to be formed through the drawing processing.

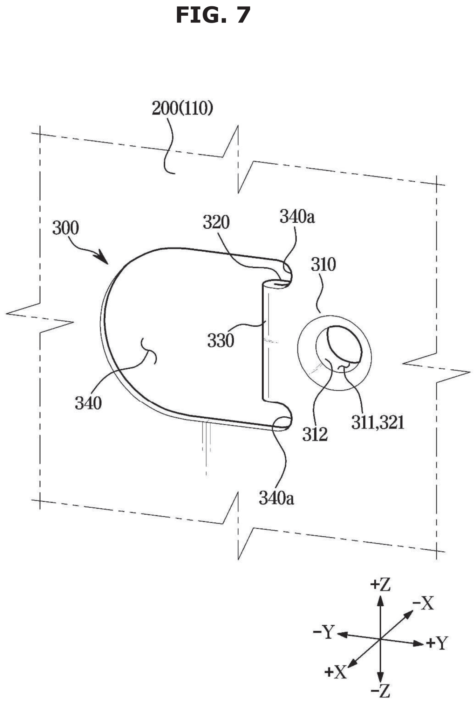

Hereinafter an improved fixing structure between the components of the outdoor unit 10 will be described in greater detail with reference to FIGS. 7 to 25. The fixing structure is configured to prevent and/or reduce the damage to the burring flange 302 such as the wear of the inner surface of the burring flange 302, to reinforce the rigidity of the fixing structure, to stably support the fastening member F, and to improve the fixing force by the fastening member F.

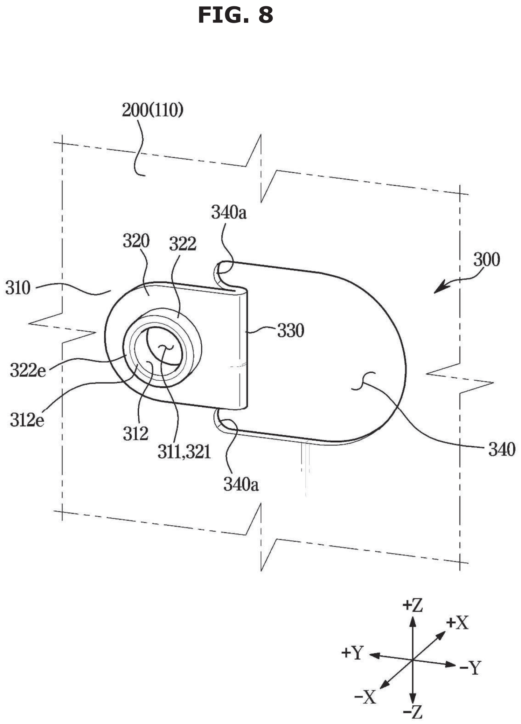

FIG. 7 is a perspective view illustrating a portion of a fixing structure of the housing included in the outdoor unit of the air conditioner according to various embodiments. FIG. 8 is a perspective view illustrating a portion of the fixing structure of the housing included in the outdoor unit of the air conditioner according to various embodiments. FIG. 9 is a cross-sectional view of various components of the housing included in the outdoor unit of the air conditioner according to various embodiments.

In describing an embodiment of the present disclosure with reference to FIGS. 7, 8 and 9 (which may be referred to as FIGS. 7 to 9), the first front frame 110 is referred to as 'first body 200', and the first front cover 180 or the second front cover 190 fixed to the first front frame 110 is referred to as 'second body 400'. As the second body 400 is fixed to the first body 200, the second body 400 may be supported by the first body 200. Therefore, the first body 200 that supports the second body 400 may be referred to as 'support body 200', and the second body 400 that is fixed to the first body 200 may also be referred to as 'object body 400'

In addition, in describing an embodiment of the present disclosure with reference to FIGS. 7 to 9, the first fixing portion 112 or the second fixing portion 113 provided on the first body 200 may be referred to as 'fixing portion 300'. The fixing portion 300 may have characteristics and structures corresponding to each of the first fixing portion 112 or the second fixing portion 113.

In addition, in describing an embodiment of the present disclosure with reference to FIGS. 7 to 9, the first cover hole 181a or the second cover hole 191a formed in the second body 400 is referred to as 'second body hole 410'. The second body hole 410 may have characteristics and structures corresponding to each of the first cover hole 181a or the second cover hole 191a.

Referring to FIGS. 7 to 9, the outdoor unit 10 of the air conditioner 1 according to an embodiment of the present disclosure may include the first body 200 and the second body 400 fixed to the first body 200 by the fastening member F. The first body 200 and the second body 400 may be fastened to each other by the fastening member F. As the fastening member F is released, the first body 200 and the second body 400 may be separated from each other.

The first body 200 may include a first fixing plate 310. The first fixing plate 310 may be provided on the fixing portion 300 of the first body 200. The first fixing plate 310 may be provided to support the second body 400. For example, one surface of the first fixing plate 310 may be in contact with the second body 400. As shown in FIGS. 7 and 8, the front surface of the first fixing plate 310 may be in contact with the second body 400.

For example, the first fixing plate 310 may be formed to have a substantially flat plate shape.

The first fixing plate 310 may be provided to be penetrated by the fastening member F. For example, the first fixing plate 310 may include a first burring hole 311 formed to be penetrated by the fastening member F. For example, the first burring hole 311 may be formed in a shape through which the first fixing plate 310 is penetrated in the front and rear direction X.

The first burring hole 311 may be formed at a position corresponding to the second body hole 410. For example, the first burring hole 311 may be disposed rearward (-X direction) of the second body hole 410. The fastening member F may sequentially penetrate the second body hole 410 and the first burring hole 311, thereby fixing the second body 400 to the first body 200.

The first body 200 may include a second fixing plate 320. The second fixing plate 320 may be provided on the fixing portion 300 of the first body 200. The second fixing plate 320 may be provided to be in contact with the first fixing plate 310. For example, the second fixing plate 320 may be in contact with the other surface opposite to the one surface of the first fixing plate 310 adjacent to the second body 400. In other words, the second fixing plate 320 may be in contact with the other surface opposite to the one surface of the first fixing plate 310 in contact with the second body 400. As shown in FIGS. 7 and 8, the second fixing plate 320 may be in contact with a rear surface of the first fixing plate 310. The first fixing plate 310 may be disposed between the second fixing plate 320 and the second body 400.

For example, the second fixing plate 320 may be formed to have a substantially flat plate shape.

For example, the first fixing plate 310 and the second fixing plate 320 may have approximately the same thickness. For example, the first fixing plate 310 and the second fixing plate 320 may have approximately the same thickness with respect to the direction in which the first fixing plate 310 and the second fixing plate 320 are in contact with each other. A X-direction thickness of the first fixing plate 310 and a X-direction thickness of the second fixing plate 320 may be approximately the same.

The second fixing plate 320 may be provided to be penetrated by the fastening member F. For example, the second fixing plate 320 may include a second burring hole 321 formed to be penetrated by the fastening member F. For example, the second burring hole 321 may be formed in a shape through which the second fixing plate 320 is penetrated in the front and rear direction X.

The second burring hole 321 may be formed at a position corresponding to the second body hole 410. For example, the second burring hole 321 may be disposed rearward (-X direction) of the second body hole 410.

Further, the second burring hole 321 may be formed at a position corresponding to the first burring hole 311. The second burring hole 321 may be arranged to correspond to the first burring hole 311. For example, the second burring hole 321 may be disposed rearward (-X direction) of the first burring hole 311. The first burring hole 311 may be disposed between the second body hole 410 and the second burring hole 321.

As the fastening member F sequentially penetrates the second body hole 410, the first burring hole 311, and the second burring hole 321, the fastening member F may fix the second body 400 to the first body 200.

The first body 200 may include a first flange 312. The first flange 312 may be provided on the fixing portion 300 of the first body 200. The first flange 312 may form a portion of the above-mentioned burring flange 302. The first flange 312 may be provided along a circumference of the first burring hole 311. The first flange 312 may protrude from the first fixing plate 310. For example, the first flange 312 may protrude from the first fixing plate 310 to a direction away from the second body 400. The first flange 312 may protrude from the first fixing plate 310 to a direction in which the second fixing plate 320 is positioned with respect to the first fixing plate 310. As shown in FIGS. 7 to 9, the first flange 312 may protrude rearward (-X direction) from the first fixing plate 310.

The first flange 312 may penetrate the second fixing plate 320. The first flange 312 may penetrate the second burring hole 321. The first flange 312 may protrude from the first fixing plate 310 to a direction of penetrating the second burring hole 321. The first flange 312 may be in contact with a circumferential portion of the second burring hole 321. The first flange 312 may support an inner circumference of the second burring hole 321.

The first burring hole 311 may be provided on one side of the first flange 312. For example, the first burring hole 311 may be provided on one side of the first flange 312 adjacent to the second body 400. In an operation of fixing the second body 400 to the first body 200 using the fastening member F, the fastening member F may enter the inside of the first flange 312 through the first burring hole 311.

For example, the first burring hole 311 may have a substantially circular shape. At this time, the first flange 312 may have a cylindrical shape with a hollow corresponding to the first burring hole 311. The hollow of the first flange 312 may be provided to allow the fastening member F to penetrate therethrough.

The first flange 312 may be provided to support the fastening member F. When fixing the second body 400 to the first body 200, the fastening member F may be disposed to penetrate the first flange 312 and may be supported by the first flange 312. The body portion FB of the fastening member F may be in contact with the inner circumferential surface of the first flange 312.

For example, a screw thread having a shape corresponding to the screw thread formed on the body portion FB of the fastening member F may be provided on the inner circumferential surface of the first flange 312.

The first body 200 may include a second flange 322. The second flange 322 may be provided on the fixing portion 300 of the first body 200. The second flange 322 may form a portion of the above-mentioned burring flange 302. The second flange 322 may be provided along a circumference of the second burring hole 321. The second flange 322 may protrude from the second fixing plate 320. For example, the second flange 322 may protrude from the second fixing plate 320 to a direction away from the second body 400. Further, the second flange 322 may protrude from the second fixing plate 320 to a direction away from the first fixing plate 310. The second flange 322 may protrude from the second fixing plate 320 to a direction in which the second fixing plate 320 is positioned with respect to the first fixing plate 310. As shown in FIGS. 7 to 9, the second flange 322 may protrude rearward (-X direction) from the second fixing plate 320. The first flange 312 and the second flange 322 may protrude in directions corresponding to each other.

The second burring hole 321 may be provided on one side of the second flange 322. For example, the second burring hole 321 may be provided on one side of the second flange 322 adjacent to the second body 400. In an operation of fixing the second body 400 to the first body 200 using the fastening member F, the fastening member F may enter the inner side of the second flange 322 through the second burring hole 321.

For example, the second burring hole 321 may have a substantially circular shape. At this time, the second flange 322 may have a cylindrical shape with a hollow corresponding to the second burring hole 321. The hollow of the second flange 322 may be provided to allow the fastening member F to penetrate therethrough.

The second flange 322 may be provided to support the fastening member F. When fixing the second body 400 to the first body 200, the fastening member F may be disposed to penetrate the second flange 322 and may be supported by the second flange 322.

The second flange 322 may be disposed in a radially outward direction than the first flange 312. The first flange 312 may be disposed in a radially inward direction than the second flange 322. The first flange 312 may form the inner circumferential surface of the above-described burring flange 302, and the second flange 322 may form the outer circumferential surface of the above-described burring flange 302. The first flange 312 may be referred to as 'inner flange 312'. The second flange 322 may be referred to as 'outer flange 322'.

In an embodiment, the first flange 312 may be formed integrally with the first fixing plate 310. Further, the second flange 322 may be formed integrally with the second fixing plate 320. Further, the first fixing plate 310, the second fixing plate 320, the first flange 312, and the second flange 322 may be each a portion of the first body 200 and formed integrally with each other. Accordingly, the first flange 312 may be referred to as 'first flange portion 312' or 'inner flange portion 312', and the second flange 322 may be referred to as 'second flange portion 322' or 'outer flange portion 322'.

The first flange 312 and the second flange 322 may be in contact with each other. For example, the inner circumferential surface of the second flange 322 may be in contact with the outer circumferential surface of the first flange 312. The second flange 322 may be provided to surround the outer circumferential surface of the first flange 312. The first flange 312 may support the second flange 322 in the radially inward direction. The second flange 322 may support the first flange 312 in the radially outward direction.

For example, as shown in FIG. 9, a portion of the first flange 312 may be in contact with the inner circumferential surface of the second flange 322, and another portion of the first flange 312 may be in contact with the circumferential portion of the second burring hole 321 of the second fixing plate 320. The first flange 312 may extend toward the inside of the second flange 322 by penetrating the second burring hole 321, and support the second fixing plate 320 and the second flange 322 from the inside.

In addition, as shown in FIG. 9, the second flange 322 may be in contact with a portion of the outer circumferential surface of the first flange 312, and the second fixing plate 320 may be in contact with another portion of the outer circumferential surface of the first flange 312. That is, the second fixing plate 320 and the second flange 322 may surround the outer circumferential surface of the first flange 312 and support the first flange 312 from the outside.

With the structure of the first flange 312 and the second flange 322 as mentioned above, the thickness of the burring flange 302 provided on the fixing portion 300 may be increased. That is, even when a material forming the fixing portion 300 is not excessively thick, the burring flange 302 may have a sufficient thickness. Accordingly, the fastening member F may be stably supported by the burring flange 302. In addition, the rigidity of the burring flange 302 of the fixing portion 300 may be improved, and thus when the fastening member F is repeatedly fastened or released, it is possible to effectively prevent and/or reduce damage to the fixing portion such as the wear of the inner circumferential surface of the burring flange 302. In addition, with this structure, the fixing force of the fastening member F that fixes the first body 200 and the second body 400 to each other may be improved. In addition, with the structure, sufficient fixing force may be secured by the fastening member F, and thus additional components (e.g., nuts, etc.) to improve fixing force may not be required, and manufacturing costs may be reduced.

Further, due to the structure in which the first fixing plate 310 and the second fixing plate 320 are in contact with each other, a protruding length of the burring flange 302 may increase. For example, even when the material forming the fixing portion 300 is not excessively thick, the length of the burring flange 302 may be sufficiently long as the first fixing plate 310 and the second fixing plate 320 are arranged to overlap each other. Accordingly, the fastening member F may be supported more stably by the burring flange 302. In addition, an area of the inner circumferential surface of the burring flange 302 in contact with the body portion FB of the fastening member F increases, and it is possible to effectively prevent and/or reduce damage to the fixing portion such as the wear of the inner circumferential surface of the burring flange 302 during the fastening member F is repeatedly fastened or released. In addition, the fixing force of the fastening member F that fixes the first body 200 and the second body 400 to each other may be improved.

A portion extending from the first fixing plate 310 to the first flange 312 of the fixing portion 300 may be in contact with a portion extending from the second fixing plate 320 to the second flange 322 in a state in which a gap is rarely formed therebetween. In other words, the first fixing plate 310 and the second fixing plate 320 may be in contact with each other, the first flange 312 and the second flange 322 may be in contact with each other, and a portion between the first fixing plate 310 and the first flange 312 and a portion between the second fixing plate 320 and the second flange 322 may be in contact with each other. A first contact surface S1 in which the first fixing plate 310 and the second fixing plate 320 are in contact with each other and a second contact surface S2 in which the first flange 312 and the second flange 322 are in contact with each other may be connected to each other. The second contact surface S2 may extend from a portion of the first contact surface S1 adjacent to the second burring hole 321.

With this structure, the rigidity of the burring flange 302 of the fixing portion 300 may be further improved, and the fixing force of the fastening member F that fixes the first body 200 and the second body 400 may be further increased.

The first flange 312 may be formed integrally with the first fixing plate 310. For example, the first flange 312 may be formed in the process in which the first burring hole 311 is formed in the first fixing plate 310 through the burring processing.

The second flange 322 may be formed integrally with the second fixing plate 320. For example, the second flange 322 may be formed in the process in which the second burring hole 321 is formed in the second fixing plate 320 through the burring processing.

A method of forming the first flange 312 and the second flange 322 will be described in greater detail below.

For example, centers of the first and second burring holes 311 and 321 may be arranged parallel to each other. Accordingly, a longitudinal central axis of the first flange 312 and a longitudinal central axis of the second flange 322 may coincide with each other. For example, as shown in FIGS. 7 to 9, the centers of the first and second burring holes 311 and 321 may be arranged in parallel with each other in the X direction. In addition, a central axis passing through the center of the first flange 312, which is the longitudinal central axis of the first flange 312, in the X direction, and a central axis passing through the center of the second flange 322, which is the longitudinal central axis of the second flange 322, in the X direction may coincide with each other.

For example, the first flange 312 may extend to a position in which the second flange 322 extends from the second fixing plate 320. For example, an end 312e, which is in a direction away from the first fixing plate 310, of the first flange 312 and an end 322e, which is in a direction away from the second fixing plate 320, of the second flange 322 may be arranged side by side. Almost the entire inner circumferential surface of the second flange 322 may be covered by the first flange 312. Alternatively, the end 312e of the first flange 312 and the end 322e of the second flange 322 may not be arranged side by side, and a portion of the inner circumferential surface of the second flange 322 may not be in contact with the outer circumferential surface of the first flange 312.

The following tables 1, 2 and to 3 (which may be referred to as tables 1 to 3) illustrate a result of an experiment for measuring the number of repetitions of fastening and separation of the fastening member F until the screw threads formed on the inner circumferential surface of the burring flange 302 are worn while the fastening member F is fastened to or separated from the fixing portion 300 by 10 times when the fixing portion 300 provided in the first body 200 has a structure of an example 1 and a structure of an example 2. In each table, when the screw threads are not worn even after repeating fastening and separation of the fastening member F to the fixing portion 300 by 10 times, the value is recorded as 10 times.

Example 1, illustrates an experiment conducted on the case where a single-layer burring flange is formed through the burring processing on a single-layer fixing plate in the fixing portion 300 of the first body 200.

Example 2, illustrates an experiment conducted on the case where a two-layer flange overlapping each other is formed through the burring processing on a two-layer fixing plate overlapping each other in the fixing portion 300 of the first body 20. That is, example 2 illustrates an experiment conducted on the case where the fixing portion 300 of the first body 200 includes the first fixing plate 310 and the second fixing plate 320 in contact with each other, and the first flange 312 and the second flange 322 in contact with each other.

In the experiment of tables 1 to 3, a material forming the first body 200 is selected as a type of Galvanized Iron (GI) such as Steel Galvanized Cold Commercial (GI-SGCC).

In the experiment of tables 1 to 3, a thickness of a metal plate forming the first body 200 is selected to be approximately 0.8 mm.

In the experiment of tables 1 to 3, diameters of the burring holes formed in the fixing portion 300 are each selected to be approximately 3.35 mm.

In the experiment of tables 1 to 3, the structure of the example 1 is provided in such a way that a length, at which the fastening member F is fastened to the fixing portion 300 (approximately, a length from one surface of the fixing plate on the side of the second body 400 to an end of the burring flange 302), is approximately 1.5 mm and the structure of the example 2 is provided in such a way that a length at which the fastening member F is fastened to the fixing portion 300 is approximately 3.1 mm.

In the experiment of tables 1 to 3, torques applied when fastening the fastening member F to the fixing portion 300 are different from each other. Table 1 shows experimental results when the torque for fastening the fastening member F to the fixing portion 300 is 14kgf*cm, table 2 shows experimental results when the torque for fastening the fastening member F to the fixing portion 300 is 23kgf*cm, and the table 3 shows experimental results when the torque for fastening the fastening member F to the fixing portion 300 is 26kgf*cm.

Referring to table 1, when fastening the fastening member F to the fixing portion 300 with a torque of 14kgf*cm, as for both the structure of the example 1 and the structure of the example 2, it can be seen that no wear occurs on the burring flange while repeating the fastening and separation of the fastening member 10 times.

Referring to table 2, when fastening the fastening member F to the fixing portion 300 with a torque of 23kgf*cm, as for the structure of the example 1, it can be seen that the wear occurs on the burring flange while repeating the fastening and separation of the fastening member 8.6 times, but as for the structure of the example 2, it can be seen that no wear occurs on the burring flange while repeating the fastening and separation of the fastening member 10 times.

Referring to table 3, when fastening the fastening member F to the fixing portion 300 with a torque of 26kgf*cm, as for the structure of the example 1, it can be seen that the wear occurs on the burring flange while repeating the fastening and separation of the fastening member 7.8 times, but as for the structure of example 2, it can be seen that no wear occurs on the burring flange while repeating the fastening and separation of the fastening member 10 times.

**[Table 1]**

| | Number of repetitions of fastening and separation of fastening member | | | | | |
|---|---|---|---|---|---|---|
| Number of test | First | Second | Third | Fourth | Fifth | average |
| example 1 | 10 | 10 | 10 | 10 | 10 | 10 |
| example 2 | 10 | 10 | 10 | 10 | 10 | 10 |

**[Table 2]**

| | Number of repetitions of fastening and separation of fastening member | | | | | |
|---|---|---|---|---|---|---|
| Number of test | First | Second | Third | Fourth | Fifth | average |
| example 1 | 5 | 10 | 9 | 9 | 10 | 8.6 |
| example 2 | 10 | 10 | 10 | 10 | 10 | 10 |

**[Table 3]**

| | Number of repetitions of fastening and separation of fastening member | | | | | |
|---|---|---|---|---|---|---|
| Number of test | First | Second | Third | Fourth | Fifth | average |
| example 1 | 10 | 5 | 10 | 10 | 4 | 7.8 |
| example 2 | 10 | 10 | 10 | 10 | 10 | 10 |

As such, referring to tables 1 to 3, because the fixing portion 300 of the first body 200 includes the first fixing plate 310, the second fixing plate 320, the first flange 312, and the second flange 322, the rigidity of the fixing portion 300 may be improved, and the fixing portion 300 may be effectively prevented and/or inhibited from being damaged due to wear, etc. Further, although a stronger torque is applied to the fastening member F when the fastening member F is fastened to the fixing portion 300, the fixing portion 300 may be not damaged and thus the fixing force of the fastening member F may be improved.

The first fixing plate 310 and the second fixing plate 320 may be connected to each other. The second fixing plate 320 may extend from one side of the first fixing plate 310. The second fixing plate 320 may extend from one side of the first fixing plate 310 toward the other side thereof.

The first body 200 may include a connection portion 330 provided to connect the first fixing plate 310 and the second fixing plate 320. The connection portion 330 may be provided on one side of the first fixing plate 310. The connection portion 330 may extend from one side of the first fixing plate 310 to the second fixing plate 320. The connection portion 330 may have a bent shape to extend from one side of the first fixing plate 310 to the second fixing plate 320.

The connection portion 330 may extend from one side of the first fixing plate 310, and the second fixing plate 320 may extend from the connection portion 330 toward the other side opposite to the connection portion 330. Accordingly, the second fixing plate 320 may face the first fixing plate 310. Accordingly, the second fixing plate 320 may be in contact with the first fixing plate 310.

The first fixing plate 310 and the second fixing plate 320 may be formed integrally with each other. The second fixing plate 320 may be bent and extended from one side of the first fixing plate 310. For example, the bent portion on one side of the first fixing plate 310 may be formed as the connection portion 330, and the second fixing plate 320 may extend from the connection portion 330. The first fixing plate 310, the connection portion 330, and the second fixing plate 320 may be formed integrally with each other. That is, the first fixing plate 310, the second fixing plate 320, and the connection portion 330 may be each a portion of the first body 200 and formed integrally with each other. Therefore, the first fixing plate 310 may be referred to as 'first plate portion 310', and the second fixing plate 320 may be referred to as 'second plate portion 320'.

For example, the second fixing plate 320 may be bent from one side of the first fixing plate 310 to a direction opposite to the second body 400. As shown in FIGS. 7 to 9, the second fixing plate 320 may be bent rearward (-X direction) from one side of the first fixing plate 310 to be in contact with the rear surface of the first fixing plate 310. In this case, the second fixing plate 320 may not be visible when a user looks at the product from the front (+X direction), and the appearance quality of the product may be improved.

The first body 200 may include a cutting hole 340. The cutting hole 340 may be formed by cutting a portion of the first body 200. The cutting hole 340 may be formed in a shape through which the first body 200 is penetrated. For example, the cutting hole 340 may be formed in a shape in which both sides of the first body 200 are penetrated. For example, as shown in FIGS. 7 to 9, the cutting hole 340 may be formed in a shape in which the first body 200 is penetrated in the front and rear direction X.

The cutting hole 340 may be provided on one side of the first fixing plate 310. The cutting hole 340 may be arranged parallel to the first fixing plate 310. For example, as shown in FIGS. 7 to 9, the cutting hole 340 may be arranged parallel to the first fixing plate 310 on the Y-Z plane.

The second fixing plate 320 may extend from one side of the first fixing plate 310 adjacent to the cutting hole 340. For example, the second fixing plate 320 may extend from one side of the first fixing plate 310 to a direction opposite to the cutting hole 340. The connection portion 330 may be provided on one side of the first fixing plate 310 in which the cutting hole 340 is provided.

According to an embodiment, after the cutting hole 340 is formed by cutting a portion of the first body 200, the second fixing plate 320 may be in contact with the first fixing plate 310 through a process of bending the cutting portion.

Because the second fixing plate 320 is formed in the process of cutting a portion of the first body 200, a size of the cutting hole 340 may be larger than a size of the second fixing plate 320. For example, an area of the cutting hole 340 may be greater than an area of the second fixing plate 320. Additionally, a X-direction thickness of the second fixing plate 320 may approximately correspond to a X-direction thickness of the cutting hole 340.

When the cutting hole 340 is excessively large, foreign substances, insects, etc. may move into the inside of the first body 200 (e.g., inside the housing 100 of the outdoor unit 10) through the cutting hole 340. Accordingly, the cutting hole 340 may be formed to have a horizontal (Y direction) and vertical (Z direction) width of 12 mm or less, respectively, to prevent and/or block foreign substances, insects, etc. from easily passing through the cutting hole 340.

For example, when the cutting hole 340 and the connection portion 330 are positioned on one side of the first fixing plate 310, and the second fixing plate 320 extends from the connection portion 330 toward the other side of the first fixing plate 310, a portion 340a of an edge of the cutting hole 340 adjacent to the first fixing plate 310 may be closer to the other side of the first fixing plate 310 than the connection portion 330. For example, the portion 340a of the edge of the cutting hole 340 may be provided on both sides of the connection portion 330, and the both sides of the connection portion 330 may refer to both sides in a direction perpendicular to a direction in which the second fixing plate 320 extends from the connection portion 330. With this structure, it may be easier to bend the second fixing plate 320 one side of the first fixing plate 310.

The process of forming the cutting hole 340 and the process of bending the second fixing plate 320 will be described in greater detail below.

Because the first fixing plate 310 and the second fixing plate 320 are formed integrally with each other, the manufacturing process may be facilitated and the manufacturing costs may be reduced. In addition, because the first fixing plate 310 and the second fixing plate 320 are formed integrally, and the connection portion 330 connecting the first fixing plate 310 and the second fixing plate 320 is formed by being bent, a sharp edge may not be formed at the boundary between the first fixing plate 310 and the second fixing plate 320 and it is possible to prevent and/or reduce injuries to workers or components such as wires from being damaged by the edges.

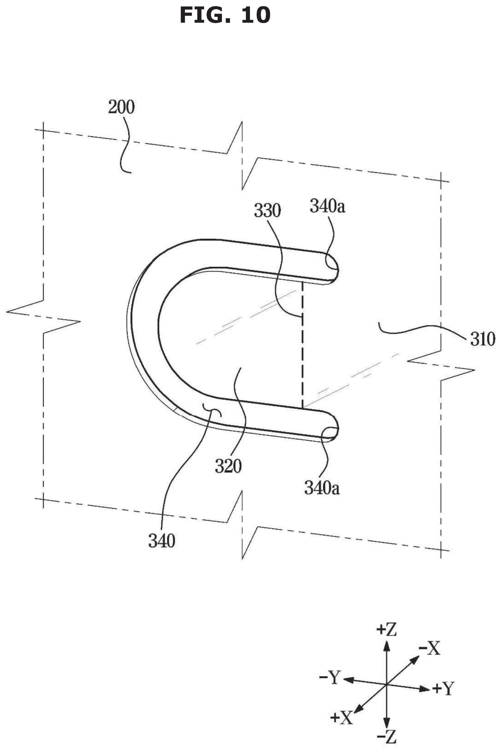

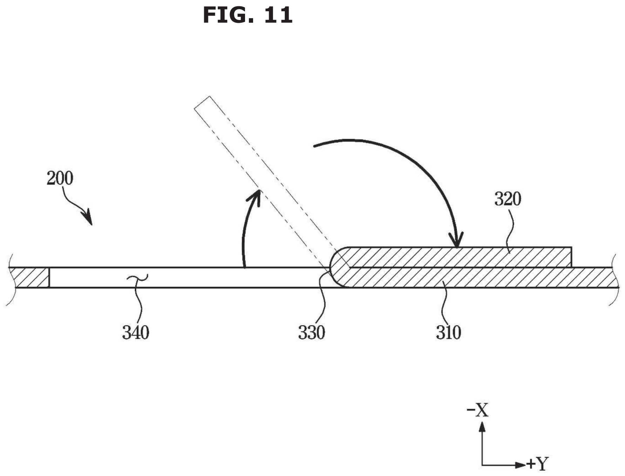

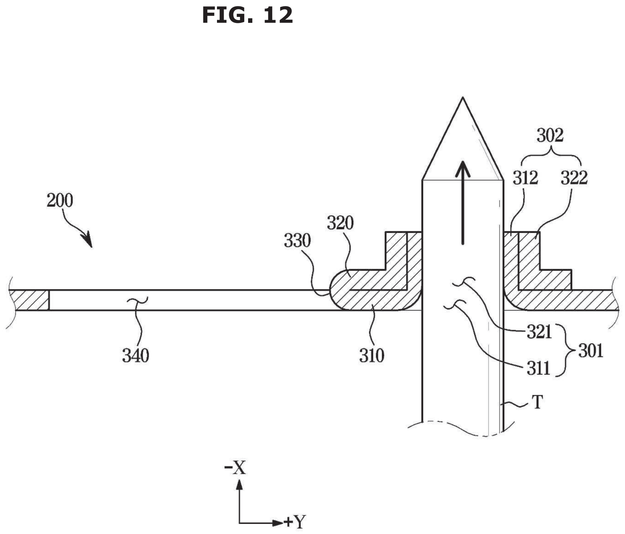

FIG. 10 is a perspective view illustrating an example operation of an example method of manufacturing the fixing structure in the outdoor unit of the air conditioner according to various embodiments. FIG. 11 is a cross-sectional view illustrating an example operation of the example method of manufacturing the fixing structure in the outdoor unit of the air conditioner according to various embodiments. FIG. 12 is a cross-sectional view illustrating an example operation of the example method of manufacturing the fixing structure in the outdoor unit of the air conditioner according to various embodiments.

Referring to FIG. 10, in a method of manufacturing the outdoor unit 10 of the air conditioner 1 according to an embodiment of the present disclosure, the method of forming the fixing portion 300 on the first body 200 may include cutting a portion of the first body 200, which is positioned on one side of the first fixing plate 310, from a metal plate that is a material of the first body 200. For example, an operation, in which the cutting hole 340 is formed on one side of the first fixing plate 310 through a trimming process, may be performed. With the operation, the second fixing plate 320 may be bent with respect to the first fixing plate 310. After the operation is performed, the second fixing plate 320 may extend from one side of the first fixing plate 310 toward the inside of the cutting hole 340, as shown in FIG. 10.

Referring to FIG. 11, an operation of bending the connection portion 330 provided to connect the first fixing plate 310 and the second fixing plate 320 may be performed. By bending the connection portion 330 provided on one side of the first fixing plate 310, the first fixing plate 310 and the second fixing plate 320 may be arranged to be in contact with each other. For example, the connection portion 330 may be bent to allow the second fixing plate 320 to be in contact with the rear surface of the first fixing plate 310.

Referring to FIG. 12, an operation of forming the burring hole 301 and the burring flange 302 in the first body 200 may be performed. The burring hole 301 and the burring flange 302 may be formed by the burring processing. For example, by sequentially penetrating the first fixing plate 310 and the second fixing plate 320 using a burring tool T, the burring hole 301 and the burring flange 302 provided along the circumference of the burring hole 301 may be formed. As the burring tool T penetrates the first fixing plate 310 and the second fixing plate 320 in a direction from the first fixing plate 310 to the second fixing plate 320, the burring hole 301 and the burring flange 302 may be formed in the first body 200. As the burring tool T penetrates the first fixing plate 310 and the second fixing plate 320 from one surface (front surface), which is opposite to the second fixing plate 320, of the first fixing plate 310 to one surface (rear surface), which is opposite to the first fixing plate 310, of the second fixing plate 320, the burring hole 301 and the burring flange 302 may be formed in the first body 200. Because the burring tool T simultaneously penetrates the first fixing plate 310 and the second fixing plate 320 with one movement, the burring hole 301 and the burring flange 302 may be simultaneously formed on the first fixing plate 310 and the second fixing plate 320.

In the operation of forming the burring hole 301 and the burring flange 302 in the first body 200, the first burring hole 311 and the first flange 312 provided along the circumference of the first burring hole 311 may be formed on the first fixing plate 310 and the second burring hole 321 and the second flange 322 provided along the circumference of the second burring hole 321 may be formed on the second fixing plate 320. The first flange 312 formed in this process may be arranged to penetrate the second fixing plate 320. The outer circumferential surface of the first flange 312 formed in this process may be in contact with the inner circumferential surface of the second flange 322.

For example, the operation of forming the burring hole 301 and the burring flange 302 in the first body 200 may include an operation in which a piercing having a small diameter is formed on the first fixing plate 310 and the second fixing plate 320 and then the burring hole 301 and the burring flange 302 are formed by pressing a vicinity of the piercing portion using the burring tool T. In this case, the burring flange 302 may be formed to have a smoother shape, and thus it is appropriate in terms of safety for workers and prevention/reduction of damage to components such as wires.

The operation of forming the burring hole 301 and the burring flange 302 in the first body 200 may include an operation in which the first fixing plate 310 and the second fixing plate 320 are penetrated by the burring tool T and at the same time, the burring hole 301 and the burring flange 302 are formed in a state in which the piercing is not formed on the first fixing plate 310 and the second fixing plate 320. In this case, a crack may be formed at the end of the burring flange 302, and thus a worker can be injured or components may be damaged. However, the manufacturing costs may be reduced.

After the burring hole 301 and the burring flange 302 are formed in the first body 200, an operation of forming the screw thread on the inner circumferential surface of the burring flange 302 may be performed. The operation of forming the screw thread on the inner circumferential surface of the burring flange 302 may not be performed separately.

Through this process, the manufacturing operation of the first body 200 in which the fixing portion 300 is provided may be completed.

An operation of fixing the first body 200 and the second body 400 using the fastening member F may be performed. For example, the second body 400 and the first body 200 may be positioned to allow the second body 400, the first fixing plate 310, and the second fixing plate 320 to be sequentially positioned and then an operation of fixing the second body 400 to the first body 200 may be performed using the fastening member F that sequentially penetrates the second body 400 and the burring hole 301. For example, the second body 400 may be positioned to be in contact with one surface of the first fixing plate 310, and then fixed to the first body 200 by the fastening member F that sequentially penetrates the second body 400 and the burring hole 301.

The method of forming the fixing portion 300 provided on the first body 200 described above with reference to FIGS. 10 to 12 is merely an example and the disclosure is not limited thereto.

For example, the connection portion 330 may be bent to allow the second fixing plate 320 to be in contact with the front surface of the first fixing plate 310 rather than the rear surface. The burring tool T may sequentially penetrate the second fixing plate 320 and the first fixing plate 310 with respect to the direction from the second fixing plate 320 to the first fixing plate 310, and thus the burring hole 301 and the burring flange 302 may be formed. In this case, the second flange protruding from the second fixing plate 320 may penetrate the first fixing plate and thus the outer circumferential surface of the second flange may be in contact with the inner circumferential surface of the first flange protruding from the first fixing plate 310.

The first fixing plate 310 and the second fixing plate 320 may not be formed integrally with each other. At this time, through a process, in which a plurality of separate fixing plates is arranged to overlap with each other and the burring tool T sequentially penetrates the plurality of fixing plates, the burring hole and the burring flange may be formed. The burring hole and the burring flange formed by the above-mentioned process may have a structure similar to the burring hole and the burring flange formed by the process of FIGS. 10 to 12.

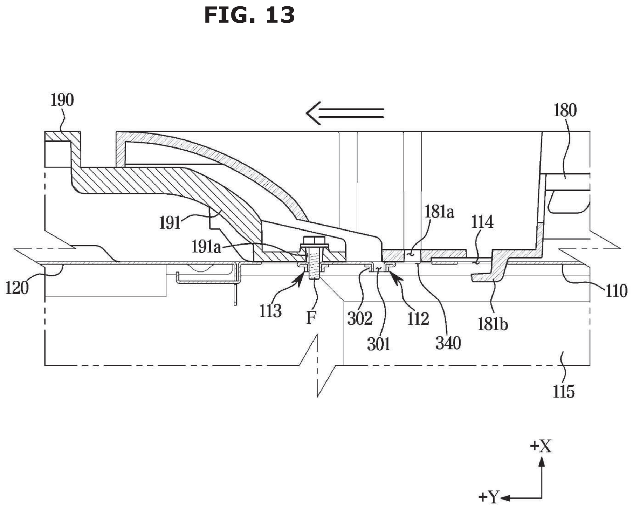

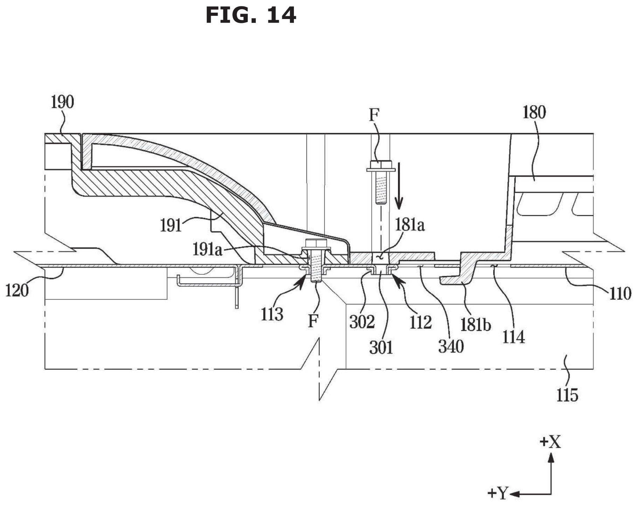

FIG. 13 is a cross-sectional view illustrating an example process of coupling various components of the housing in the outdoor unit of the air conditioner according to various embodiments. FIG. 14 is a cross-sectional view illustrating an example process of coupling various components of the housing in the outdoor unit of the air conditioner according to various embodiments.

Referring to FIGS. 13 and 14, in the outdoor unit 10 of the air conditioner 1 according to an embodiment of the present disclosure, the first front cover 180 may be slidable with respect to the first front frame 110. For example, the first front cover 180 may be provided to be slidable with respect to the first front frame 110 in a state in which the first front cover 180 is not fastened to the first front frame 110 by the fastening member F.

The first front cover 180 may be movable between a first position (refer to FIG. 13) in which the first front cover 180 is separated from the first front frame 110 and a second position (refer to FIG. 14) in which the first front cover 180 is locked to the first front frame 110. For example, as shown in FIGS. 13 and 14, the first front cover 180 may be provided to be movable in the horizontal direction (Y direction) between the first position and the second position. Even when the first front cover 180 is positioned in the second position, the first front cover 180 may move toward the first position but the first front cover 180 may be restricted from moving in other directions (e.g., the front and rear direction (X direction)). For example, when the first front cover 180 is positioned in the second position and is restrained in the first direction with respect to the first front frame 110, the first front cover 180 may move to a second direction different from the first direction between the first and second positions with respect to the first front frame 110.

When the first front cover 180 is positioned in the first position, the first cover hole 181a may be not arranged in parallel with the burring hole 301 of the first fixing portion 112. When the first front cover 180 is positioned in the second position, the first cover hole 181a and the burring hole 301 of the first fixing portion 112 may be arranged in parallel with each other. For example, when the first front cover 180 is positioned in the second position, the first cover hole 181a and the burring hole 301 of the first fixing portion 112 may be parallel to each other in the front and rear direction X. Accordingly, in the state in which the first front cover 180 is positioned in the second position, the fastening member F may sequentially penetrate the first cover hole 181a and the burring hole 301 of the first fixing portion 112, and the first front cover 180 may be fixed to the first front frame 110 by the fastening member F.

The first front cover 180 may include a guide protrusion 181b. The guide protrusion 181b may be provided to guide the first front cover 180 moving between the first position and the second position with respect to the first front frame 110.

Referring to FIGS. 13 and 14, the first front frame 110 may include a guide hole 114 provided to allow the guide protrusion 181b to penetrate therethrough. The guide hole 114 may be provided to be penetrated by the guide protrusion 181b when the first front cover 180 is positioned between the first position and the second position with respect to the first front frame 110.

The guide hole 114 may be formed to have a shape in which both sides of the first front frame 110 are penetrated. For example, the guide hole 114 may be formed to have a shape of being penetrated in the front and rear direction X by the guide protrusion 181b.

The guide protrusion 181b may move in a state of being disposed to penetrate the guide hole 114, and thus the guide protrusion 181b may guide the sliding movement of the first front cover 180 with respect to the first front frame 110. The guide protrusion 181b may interfere with an edge portion of the guide hole 114 when the first front cover 180 is positioned in the first position or the second position.

The guide hole 114 may extend along the movement direction of the first front cover 180 with respect to the first front frame 110. A distance between the first and second positions of the first front cover 180 may correspond to an extended length of the guide hole 114. For example, the guide hole 114 may extend along the horizontal direction Y.

As illustrated in FIG. 13, as the first front cover 180 is positioned to be in contact with the front surface of the first front frame 110, the guide protrusion 181b may penetrate the guide hole 114. When the first front cover 180 is positioned in the first position, the guide protrusion 181b may be disposed to penetrate the guide hole 114. At this time, the guide protrusion 181b may not be restricted from moving in the first direction (e.g., the front and rear direction (X)) with respect to the guide hole 114. Accordingly, when the first front cover 180 is positioned in the first position, the first front cover 180 may be separatable from the first front frame 110.

As shown in FIG. 13, in a state in which the guide protrusion 181b penetrates the guide hole 114, the first front cover 180 may be movable in a second direction (e.g., horizontal direction Y) with respect to the first front frame 110. While the first front cover 180 moves in the second direction with respect to the first front frame 110, the first front cover 180 may move between the first position and the second position.

As illustrated in FIG. 14, when the first front cover 180 is positioned in the second position, the guide protrusion 181b may be arranged to penetrate the guide hole 114. At this time, the guide protrusion 181b may be restricted from moving in the first direction (e.g., the front and rear direction X) with respect to the guide hole 114. For example, when the first front cover 180 is positioned in the second position, the guide protrusion 181b may interfere with the rear surface of the first front frame 110 and be restricted from moving in the first direction. As shown in FIG. 14, although the guide protrusion 181b is not always in contact with the rear surface of the first front frame 110, when it is intended to move the first front cover 180 to the first direction so as to separate the first front cover 180 from the first front frame 110, the guide protrusion 181b may move a short distance and then interfere with the edge of the guide hole 114. Accordingly, in the second position, the first front cover 180 may be restrained in the first direction with respect to the first front frame 110 and may not be separable from the first front frame 110.

As shown in FIG. 14, when the first front cover 180 is positioned in the second position, the position of the first front cover 180 with respect to the first front frame 110 may be guided by the guide protrusion 181b. The first cover hole 181a of the first front cover 180 and the burring hole 301 of the first fixing portion 112 of the first front frame 110 may be arranged side by side. Accordingly, the process of fixing the first front cover 180 to the first front frame 110 using the fastening member F may be easily performed.

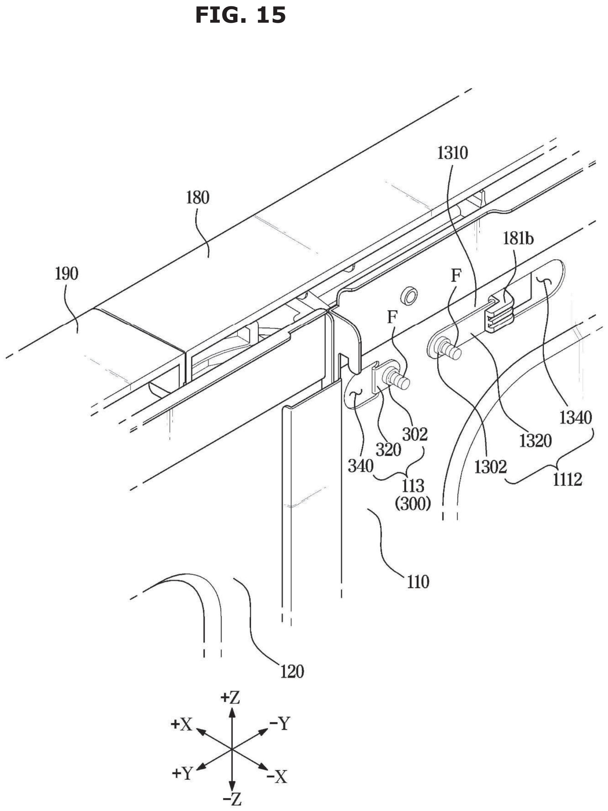

FIG. 15 is an enlarged partial perspective view of various components of a housing included in an outdoor unit of an air conditioner according to various embodiments.

In describing various components of a housing included in an outdoor unit of an air conditioner according to an embodiment of the present disclosure with reference to FIG. 15, the same reference numerals may be given to the same components as those of the example shown in FIGS. 1 to 14, and a description thereof may not be repeated here.

Referring to FIG. 15, a first front frame 110 included in an outdoor unit 10 of an air conditioner 1 according to an embodiment of the present disclosure may include a first fixing portion 1112 to which a first front cover 180 is fixed. The first fixing portion 1112 may have characteristics corresponding to the first fixing portion 112 in the example described with reference to FIGS. 4 to 14.

The first fixing portion 1112 may include a first fixing plate 1310 and a second fixing plate 1320 which are in contact with each other. For example, the second fixing plate 1320 may extend from one side of the first fixing plate 1310. For example, the first fixing plate 1310 and the second fixing plate 1320 may be formed integrally with each other.

In the first fixing portion 1112, a burring hole (not shown) and a burring flange 1302 provided along a circumference of the burring hole may be provided. The first front cover 180 may be fixed to the first front frame 110 by a fastening member F that sequentially penetrates the first front cover 180 and the burring hole of the first fixing portion 1112. The burring hole may be formed to allow the fastening member F to penetrate the first fixing plate 1310 and the second fixing plate 1320. The burring flange 1302 may protrude from the first fixing plate 1310 and the second fixing plate 1320 so as to support the fastening member F that sequentially penetrates the first fixing plate 1310 and the second fixing plate 1320.

The first fixing portion 1112 may include a cutting hole 1340 provided on one side of the first fixing plate 1310. As the cutting hole 1340 is formed, the second fixing plate 1320 may be provided to be bendable with respect to the first fixing plate 1310.

The guide protrusion 181b provided on the first front cover 180 may be arranged to penetrate the cutting hole 1340. For example, when the first front cover 180 is positioned between a first position separatable from the first front frame 110 and a second position locked to the first front frame 110, the guide protrusion 181b may be arranged to penetrate the cutting hole 1340. The guide protrusion 181b may be provided to be movable along the cutting hole 1340 while being arranged to penetrate the cutting hole 1340. Accordingly, the guide protrusion 181b may guide the sliding movement of the first front cover 180 with respect to the first front frame 110. For example, the cutting hole 1340 may perform a function corresponding to the guide hole 114 shown in FIGS. 13 and 14.

At an edge of the cutting hole 1340, the guide protrusion 181b may interfere with the first front frame 110. For example, when the first front cover 180 is positioned in the second position, the guide protrusion 181b may interfere with one surface of the second fixing plate 1320, and accordingly, the first front cover 180 may be locked to the front frame 110.

In a position in which the guide protrusion 181b interferes with the second fixing plate 1320, the first cover hole 181a of the first front cover 180 and the burring hole of the first fixing portion 1112 may be arranged side by side, and the fastening member F may sequentially penetrate the first cover hole 181a of the first front cover 180 and the burring hole of the first fixing portion 1112, thereby fixing the first front cover 180 to the front frame 110.

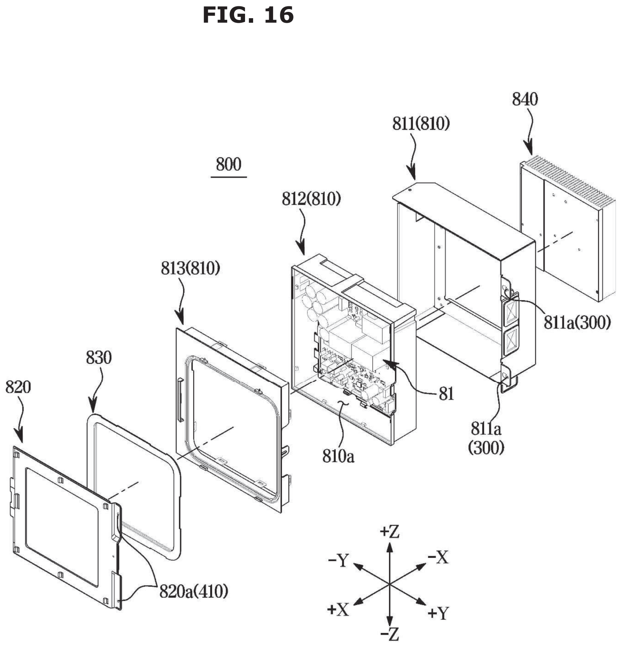

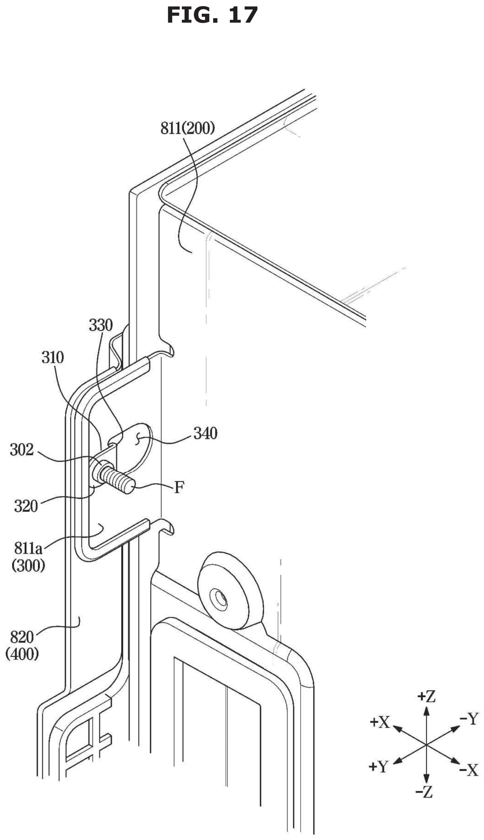

FIG. 16 is an exploded perspective view of various components of a control box included in the outdoor unit of the air conditioner according to various embodiments. FIG. 17 is an enlarged partial perspective view of various components of the control box included in the outdoor unit of the air conditioner according to various embodiments.

A configuration of the first control box 800 that is one of the control boxes included in the outdoor unit 10 of the air conditioner 1 according to an embodiment of the present disclosure will be described with reference to FIGS. 16 and 17, and a description of the configuration of the first control box 800 described below may be correspondingly applied to a configuration of the second control box 900.

Referring to FIGS. 16 and 17, the outdoor unit 10 of the air conditioner 1 according to an embodiment of the present disclosure may include the first control box 800. The first control box 800 may accommodate a printed circuit board 81.

For example, the first control box 800 may include a case 810 provided to accommodate the printed circuit board 81. An accommodating space 810a may be formed inside the case 810 to accommodate the printed circuit board 81.

The case 810 may be formed to include one side that is open. For example, an opening may be formed on one side of the case 810. For example, the printed circuit board 81 may be inserted into or taken out of the case 810 through the opening of the case 810. A worker can access the printed circuit board 81 accommodated in the accommodating space 810a through the opening of the case 810 to perform tasks such as inspecting, replacing, or repairing components.

For example, the case 810 may be formed to allow the front (+X direction) to be open. That is, the opening of the case 810 may be formed in a front portion of the case 810.

The first control box 800 may include a case cover 820 provided to be removably coupled to the case 810. The case cover 820 may be coupled to the case 810 to close the accommodating space 810a of the case 810. The case cover 820 may be separated from the case 810 to open the accommodating space 810a of the case 810. For example, a manufacturer of the first control box 800 can insert the printed circuit board 81 into the case 810 to install the printed circuit board 81 and then couple the case cover 820 to the case 810 to close the accommodating space 810a. A worker who needs to inspect the printed circuit board 81 inside the first control box 800 or replace or repair components can access the printed circuit board 81 by separating the case cover 820 from the case 810.

For example, the case cover 820 may be coupled to the front (+X direction) of the case 810. That is, the case cover 820 may cover the printed circuit board 81 from the front (+X direction).

For example, the case cover 820 may be fixed to the case 810 by a fastening member F. For example, the case 810 may include a cover coupling portion 811a to which the case cover 820 is coupled. The case cover 820 may include a case cover hole 820a penetrated by the fastening member F. The case cover 820 may be fixed to the case 810 by the fastening member F that sequentially penetrates the case cover hole 820a and the cover support portion 811a. The case cover 820 may be fixed to the case 810 when the fastening member F is fastened, and the case cover 820 may be separated from the case 810 when the fastening member F is released.

Accordingly, the printed circuit board 81 inside the case 810 may be normally protected from external shock, foreign substances introduced from the outside, leaked refrigerant gas, etc. by the case cover 820. In addition, when the case cover 820 is removed as needed, a worker can access the printed circuit board 81.

For example, the first control box 800 may include a gasket 830 provided to seal a gap between the case 810 and the case cover 820. For example, the gasket 830 may be provided to seal the gap between the case 810 and the case cover 820 when the case cover 820 is coupled to the case 810. The gasket 830 may be provided to prevent and/or block foreign substances outside the case 810 or refrigerant leaked from components disposed in the machine room R2, etc. from moving into the case 810.

For example, the first control box 800 may include a heat sink 840. The heat sink 840 may be provided to dissipate heat generated inside the first control box 800 to the outside of the first control box 800. For example, the heat sink 840 may be provided to dissipate heat generated by the printed circuit board 81 to the outside of the case 810.

For example, the heat sink 840 may be coupled to the rear (-X direction) of the case 810. In this case, the heat sink 840 may be provided to dissipate heat generated by the printed circuit board 81 to the rear (-X direction) of the case 810.

In an embodiment, the case 810 may include an outer case 811 and an inner case 812. The outer case 811 and the inner case 812 may be coupled to each other to form a single case 810.

For example, the outer case 811 may form an exterior of the first control box 800. The outer case 811 may be disposed in the machine room R2. An outer surface of the outer case 811 may be disposed to be exposed to the machine room R2.

The inner case 812 may be disposed inside the outer case 811. For example, the inner case 812 may be coupled to the inside of the outer case 811.

The inner case 812 may be provided to accommodate the printed circuit board 81. The inner case 812 may form the accommodating space 810a in which the printed circuit board 81 is accommodated. The printed circuit board 81 may be installed inside the inner case 812.

The case 810 may include a frame 813. The frame 813 may be provided along an edge of the opening of the case 810. For example, the frame 813 may have a shape extending from the edge of the opening of the case 810 toward the outside of the edge. For example, the frame 813 may be coupled to one side of the inner case 812 in the opening direction. For example, in a state of being coupled to the case 812, the case cover 820 may cover at least a portion of the frame 813.

For example, a flammable refrigerant may be used in the refrigerant cycle of the air conditioner 1. When the flammable refrigerant leaks from various components of the outdoor unit 10, there is a risk of fire. Therefore, when a fire occurs due to the refrigerant leaking from the inside of the outdoor unit 10, it is important to prevent and/or reduce the spread of fire. When the fire occurs outside the first control box 800, the fire may spread to the inside of the control box 800, causing the larger fire.

According to an embodiment, the outer case 811 forming an outer surface of the control box 800 may be formed of a metal material, and it is possible to effectively prevent and/or reduce the fire from spreading to the inside of the control box 800. A thickness of the outer case 811 required to prevent and/or reduce the spread of fire may be not large, and when the thickness of the outer case 811 is too large, the overall weight of the first control box 800 may increase. Accordingly, the thickness of the outer case 811 may be determined to be sufficient to prevent and/or reduce the spread of fire.

However, when the outer case 811 has a small thickness, a structure configured to allow the fastening member F to be stably supported when the fastening member F penetrates the outer case 811 may be required in a fixing structure to fix some components of the first control box 800 to the outer case 811. Further, when the process of fastening or separation the fastening member F to the outer case 811 is repeated, a portion, in which the fastening member F is fastened to the outer case 811, may be worn off. Therefore, in this case, the outer case 811 may be required to have a structure to prevent and/or inhibit the portion, in which the fastening member F is fastened, from being worn and to reinforce a rigidity of the outer case 811.

For example, the cover coupling portion 811a of the outer case 811 may include a fixing portion 300. The fixing portion 300 may be provided to allow the inner case 812 to be fixed to the outer case 811 by the fastening member F. The fixing portion 300 provided in the cover coupling portion 811a may have a configuration corresponding to the fixing portion 300 described with reference to FIGS. 7 to 9. The outer case 811 may correspond to the first body and the case cover 820 may correspond to the second body.

For example, the cover coupling portion 811a may include a first fixing plate 310 provided to support the case cover 820, a second fixing plate 320 in contact with the first fixing plate 310, a burring hole provided in the first fixing plate 310 and the second fixing plate 320 and provided to allow the fastening member F to penetrate, and a burring flange 302 provided along a circumference of the burring hole. The burring hole and the burring flange 302 may have a structure corresponding to the first burring hole 311, the second burring hole 321, the first flange 312, and the second flange 322 shown in FIGS. 7 to 9.

Further, the cover coupling portion 811a may include a connection portion 330 provided to connect the first fixing plate 310 and the second fixing plate 320. For example, the first fixing plate 310, the second fixing plate 320, and the connection portion 330 may be formed integrally with each other. Further, the cover coupling portion 811a may include a cutting hole 340 formed by cutting one side of the first fixing plate 310.

For example, the outer case 811 may be provided with a fixing portion provided to allow the above-described inner case 812 to be fixed to the outer case 811 by the fastening member F. The fixing portion may have characteristics or structures corresponding to those of the fixing portion 300.

In addition, various components included in the first control box 800 may be provided with a structure corresponding to the fixing portion 300 according to an embodiment of the present disclosure, so as to fix the components.

A structure, in which the second body is movable with respect to the first body, the second body includes the guide protrusion provided to guide the sliding movement with respect to the first body, and the first body includes the guide hole through which the guide protrusion is penetrated, as illustrated in the example of FIGS. 13 to 15 may be applied to the fixing structure between the components of the first control box 800. Further, the guide hole may be the cutting hole 340 of the fixing portion 300.

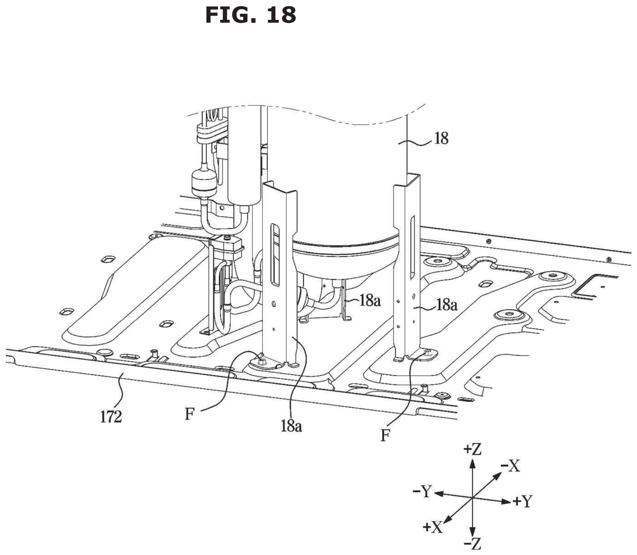

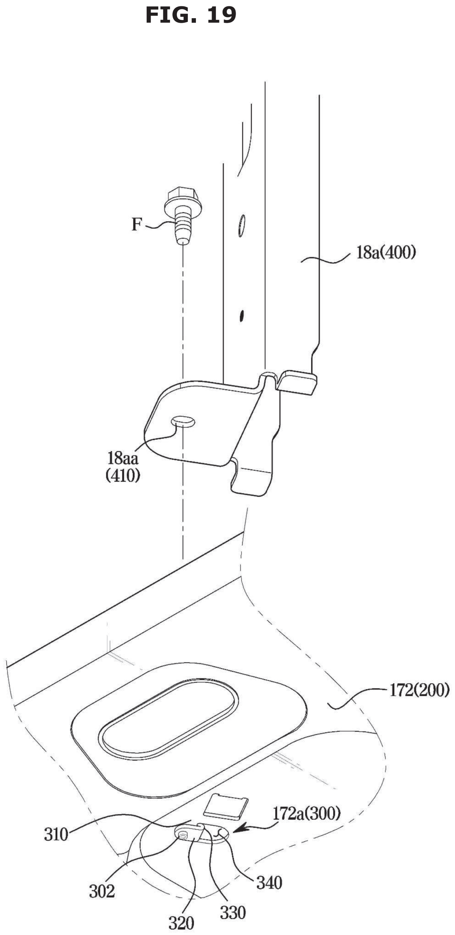

FIG. 18 is a perspective view illustrating various components included in the outdoor unit of the air conditioner according to various embodiments. FIG. 19 is a partial exploded perspective view illustrating a coupling relationship between a base and a bracket coupled thereto included in the outdoor unit of the air conditioner according to various embodiments.

A structure of an accumulator 18, which is one of several components included in the outdoor unit 10 of the air conditioner 1 according to an embodiment of the present disclosure, and a bracket 18a provided to support the accumulator 18 will be described with reference to FIGS. 18 and 19, and a content about the structure of the bracket 18a may be applied to a bracket provided to support other components included in the outdoor unit 10 in addition to the accumulator 18.

Referring to FIGS. 18 and 19, the outdoor unit 10 of the air conditioner 1 according to an embodiment of the present disclosure may include the accumulator 18. The accumulator 18 may be provided to accumulate a portion of the refrigerant flowing into the compressor 12. The accumulator 18 may be provided to discharge the accumulated refrigerant to the compressor 12 as needed. The accumulator 18 may be provided to separate the refrigerant, which is discharged from the outdoor heat exchanger 11, into liquid and gas and provided to supply the liquid and gas to the compressor 12.

The accumulator 18 may be arranged adjacent to the compressor 12. The accumulator 18 may be arranged in the machine room R2.

The accumulator 18 may be supported by the base 172. For example, the outdoor unit 10 may include the bracket 18a provided to support the accumulator 18, and the bracket 18a may be supported by the base 172. The base 172 may include a bracket support portion 172a provided to support the bracket 18a. For example, the bracket 18a may be coupled to the bracket support portion 172a and supported by the base 172.

FIGS. 18 and 19 show an example in which three brackets 18a support the accumulator 18, but the number of brackets 18a is not limited thereto.

The bracket 18a may be fixed to the accumulator 18. For example, the bracket 18a may be fixed to the accumulator 18 through a welding process.

The bracket 18a may be fixed to the base 172. For example, the bracket 18a may be coupled to the base 172 by a fastening member F. The bracket 18a may include a bracket hole 18aa through which the fastening member F passes.

Vibration occurring during operation of the compressor 12 may be transmitted to components inside the outdoor unit 10, such as the accumulator 18. When the fixing force of the fastening member F, which fixes the components to the components of the housing, such as the base 172, is not large enough, the fastening member F may be separated and the components, which are fixed to the housing 10 by the fastening member F, may be separated from fixed positions thereof. For example, the vibration generated from the compressor 12 may be transmitted to the accumulator 18. In this case, when the fixing force of the fastening member F, which fixes the bracket 18a to the base 172, is not sufficient, the bracket 18a may be separated from the base 172, and the accumulator 18 may be separated from a fixed position thereof.

To prevent and/or reduce the above-mentioned difficulty, the bracket support portion 172a of the base 172 may include a fixing portion 300 provided to fix the bracket 18a. The fixing portion 300 may be provided to allow the bracket 18a to be fixed to the base 172 by a fastening member F.

The fixing portion 300 provided in the bracket support portion 172a may have a configuration corresponding to the fixing portion 300 described with reference to FIGS. 7 to 9. The base 172 may correspond to the first body and the bracket 18a may correspond to the second body. The bracket hole 18aa may correspond to the second body hole.

For example, the bracket support portion 172a may include a first fixing plate 310 provided to support the bracket 18a, a second fixing plate 320 in contact with the first fixing plate 310, a burring hole provided in the first fixing plate 310 and the second fixing plate 320 and provided to allow the fastening member F to penetrate therethrough, and a burring flange 302 provided along a circumference of the burring hole. The burring hole and the burring flange 302 may have a structure corresponding to the first burring hole 311, the second burring hole 321, the first flange 312, and the second flange 322 shown in FIGS. 7 to 9.

Further, the bracket support portion 172a may include a connection portion 330 provided to connect the first fixing plate 310 and the second fixing plate 320. For example, the first fixing plate 310, the second fixing plate 320, and the connection portion 330 may be formed integrally with each other. Further, the bracket support portion 172a may include a cutting hole 340 formed by cutting one side of the first fixing plate 310.

In addition, various components of the housing 100 may be provided with a structure corresponding to the fixing portion 300 according to an embodiment of the present disclosure, so as to fix the components of the outdoor unit 10.

A structure, in which the second body is movable with respect to the first body, the second body includes the guide protrusion provided to guide the sliding movement with respect to the first body, and the first body includes the guide hole through which the guide protrusion is penetrated as described in the example of FIGS. 13 to 15, may be applied to the fixing structure between the housing 100 and other components of the outdoor unit 10. Further, the guide hole may be the cutting hole 340 of the fixing portion 300.

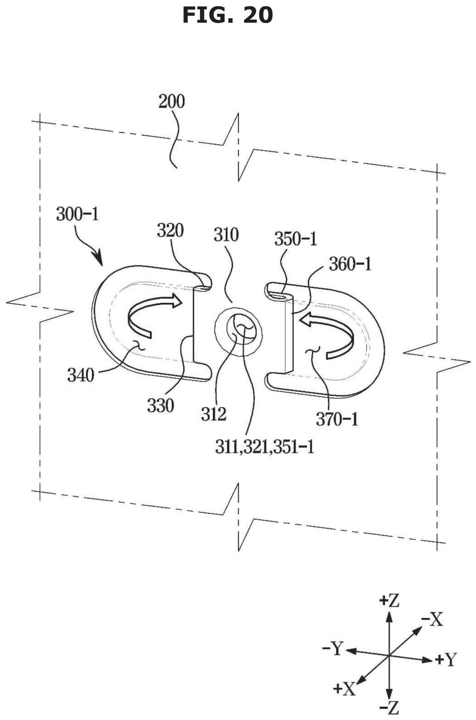

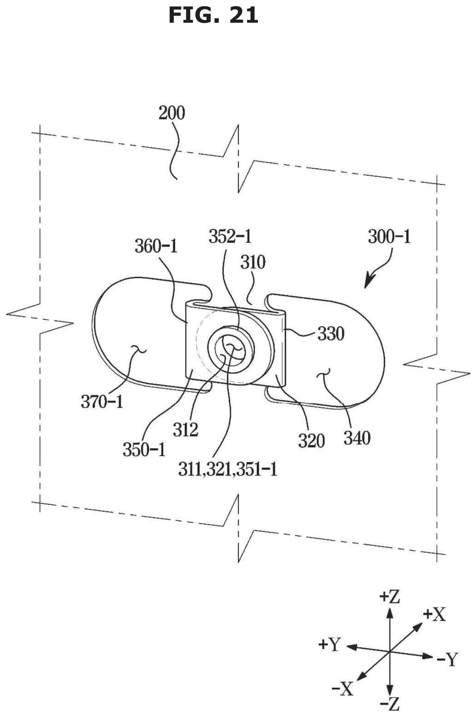

FIG. 20 is a perspective view illustrating a portion of a fixing structure between components included in the outdoor unit of the air conditioner according to various embodiments. FIG. 21 is a perspective view illustrating a portion of the fixing structure between components included in the outdoor unit of the air conditioner according to various embodiments.

In describing a fixing structure between components included in the outdoor unit of the air conditioner according to an embodiment of the present disclosure with reference to FIGS. 20 and 21, the same reference numerals may be given to the same components as those of the example shown in FIGS. 1 to 19, and a description thereof may not be repeated here.

Referring to FIGS. 20 and 21, a first body 200 included in the outdoor unit 10 of the air conditioner 1 according to an embodiment of the present disclosure may include a fixing portion 300-1 to which a second body 400 is fixed.

Although the second body 400 is not shown in FIGS. 20 and 21, the second body 400 described below may have a structure corresponding to the second body 400 described with reference to FIGS. 1 to 19.

In the same or similar manner as the fixing portion 300 according the above-mentioned embodiment, the fixing portion 300-1 of FIGS. 20 and 21 may include a first fixing plate 310 and a second fixing plate 320. A first burring hole 311 may be formed in the first fixing plate 310, and a second burring hole 321 may be formed in the second fixing plate 320. The fixing portion 300-1 may include a first flange 312 provided along a circumference of the first burring hole 311 and provided to protrude from the first fixing plate 310, and a second flange 322 provided along a circumference of the second burring hole 321 and provided to protrude from the second fixing plate 320. As described above, an inner circumferential surface of the second flange 322 and an outer circumferential surface of the first flange 312 may be in contact with each other.

For example, a screw thread having a shape corresponding to a screw thread formed on a body portion FB of a fastening member F may be provided on the inner circumferential surface of the first flange 312.

Additionally, the fixing portion 300-1 may include a third fixing plate 350-1. The third fixing plate 350-1 may be in contact with the second fixing plate 320. For example, the third fixing plate 350-1 may be in contact with the other surface of the second fixing plate 320, which is opposite to the one surface in contact with the first fixing plate 310. The second fixing plate 320 may be disposed between the third fixing plate 350-1 and the first fixing plate 310. As shown in FIGS. 20 and 21, the third fixing plate 350-1 may be in contact with a rear surface of the second fixing plate 320.

For example, the third fixing plate 350-1 may be formed to have a substantially flat plate shape.

For example, the third fixing plate 350-1 may have a thickness that is approximately the same as the thickness of each of the first fixing plate 310 and the second fixing plate 320. For example, the first fixing plate 310, the second fixing plate 320, and the third fixing plate 350-1 may have approximately the same thickness in the direction in which the first fixing plate 310, the second fixing plate 320, and the third fixing plate 350-1 are in contact with each other. The first fixing plate 310, the second fixing plate 320, and the third fixing plate 350-1 may have approximately the same thickness in the X-direction.

The third fixing plate 350-1 may be provided to be penetrated by the fastening member F. The third fixing plate 350-1 may include a third burring hole 351-1. The third burring hole 351-1 may be formed to be penetrated by the fastening member F. For example, the third burring hole 351-1 may be formed in a shape in which the third fixing plate 350-1 is penetrated in the front and rear direction X.

The third burring hole 351-1 may be formed at a position corresponding to the second body hole 410 of the second body 400. For example, the third burring hole 351-1 may be disposed rearward (-X direction) of the second body hole 410.

Additionally, the third burring hole 351-1 may be formed at a position corresponding to the first burring hole 311 and the second burring hole 321. For example, the third burring hole 351-1 may be disposed rearward (-X direction) of the first burring hole 311 and the second burring hole 321. The second burring hole 321 may be disposed between the first burring hole 311 and the third burring hole 351-1.

The fastening member F may sequentially penetrate the second body hole 410, the first burring hole 311, the second burring hole 321, and the third burring hole 351-1, thereby fixing the second body 400 to the first body 200.

The fixing portion 300-1 may include a third flange 352-1. The third flange 352-1 may form a portion of the above-mentioned burring flange 302. The third flange 352-1 may be provided along a circumference of the third burring hole 351-1. The third flange 352-1 may protrude from the third fixing plate 350-1. For example, the third flange 352-1 may protrude from the third fixing plate 350-1 to a direction away from the second body 400. The third flange 352-1 may protrude from the third fixing plate 350-1 to a direction away from the first fixing plate 310. The third flange 352-1 may protrude from the third fixing plate 350-1 to a direction away from the second fixing plate 320. The third flange 352-1 may protrude from the third fixing plate 350-1 to a direction in which the third fixing plate 350-1 is positioned with respect to the second fixing plate 320. As shown in FIGS. 20 and 21, the third flange 352-1 may protrude rearward (-X direction) from the third fixing plate 350-1.

The third burring hole 351-1 may be provided on one side of the third flange 352-1. For example, the third burring hole 351-1 may be provided on one side of the third flange 352-1 adjacent to the second body 400. In an operation of fixing the second body 400 to the first body 200 using the fastening member F, the fastening member F may enter an inside of the third flange 352-1 through the third burring hole 351-1.

For example, the third burring hole 351-1 may have a substantially circular shape. At this time, the third flange 352-1 may have a cylindrical shape with a hollow corresponding to the third burring hole 351-1. The hollow of the third flange 352-1 may be provided to allow the fastening member F to penetrate therethrough.

The third flange 352-1 may be provided to support the fastening member F. When fixing the second body 400 to the first body 200, the fastening member F may be arranged to penetrate the third flange 352-1 and supported by the third flange 352-1.

The third flange 352-1 may be disposed in a radially outward direction than the first flange 312 and the second flange 322. The first flange 312 and the second flange 322 may be disposed in a radially inward direction than the third flange 352-1. The first flange 312 may form an inner circumferential surface of the above-described burring flange 302, and the third flange 352-1 may form an outer circumferential surface of the above-described burring flange 302.

The third flange 352-1 may be in contact with the second flange 322. For example, the inner circumferential surface of the third flange 352-1 may be in contact with the outer circumferential surface of the second flange 322. The third flange 352-1 may be provided to surround the outer circumferential surface of the second flange 322. The second flange 322 may support the third flange 352-1 in the radially inward direction. The third flange 352-1 may support the second flange 322 in the radially outward direction.

The first burring hole 311, the second burring hole 321, and the third burring hole 351-1 may be arranged to allow centers thereof to be parallel to each other. Correspondingly, a longitudinal central axis of the first flange 312, a longitudinal central axis of the second flange 322, and a longitudinal central axis of the third flange 352-1 may coincide with each other.

For example, an end of the first flange 312 in the direction away from the first fixing plate 310, an end of the second flange 322 in the direction away from the second fixing plate 320, and an end of the third flange 352-1 in the direction away from the third fixing plate 350-1 may be parallel to each other.

As described above, the first fixing plate 310 and the second fixing plate 320 may be connected to each other. The second fixing plate 320 may extend from one side of the first fixing plate 310. The fixing portion 300-1 may include a first connection portion 330 provided to connect the first fixing plate 310 and the second fixing plate 320.

The first fixing plate 310 and the third fixing plate 350-1 may be connected to each other. The third fixing plate 350-1 may extend from one side of the first fixing plate 310. The third fixing plate 350-1 may extend from one side of the first fixing plate 310 toward the other side.

For example, the third fixing plate 350-1 may extend from one side opposite to the second fixing plate 320 with respect to the first fixing plate 310.

The fixing portion 300-1 may include a second connection portion 360-1 connecting the first fixing plate 310 and the third fixing plate 350-1. The second connection portion 360-1 may be provided on one side of the first fixing plate 310. The second connection portion 360-1 may extend from one side of the first fixing plate 310 to the third fixing plate 350-1. The second connection portion 360-1 may have a bent shape extending from one side of the first fixing plate 310 to the third fixing plate 350-1.

The second connection portion 360-1 may extend from one side of the first fixing plate 310, and the third fixing plate 350-1 may extend from the second connection portion 360-1 toward the other side opposite to the second connection portion 360-1. Accordingly, the third fixing plate 350-1 may face the first fixing plate 310 and the second fixing plate 320. Accordingly, the third fixing plate 350-1 may come into contact with the second fixing plate 320.

The third fixing plate 350-1 may be bent from one side of the first fixing plate 310 to a direction opposite to the second body 400. As shown in FIGS. 20 and 21, the third fixing plate 350-1 may be bent rearward (-X direction) from one side of the first fixing plate 310 so as to be in contact with the rear surface of the second fixing plate 320.

The first fixing plate 310 and the third fixing plate 350-1 may be formed integrally. The third fixing plate 350-1 may be bent and extended from one side of the first fixing plate 310. For example, a bent portion on one side of the first fixing plate 310 may be formed as the second connection portion 360-1, and the third fixing plate 350-1 may be extended from the second connection portion 360-1. The first fixing plate 310, the second connection portion 360-1, and the third fixing plate 350-1 may be formed integrally.

For example, the fixing portion 300-1 may include a first cutting hole 340. The first cutting hole 340 may be formed by cutting a portion of the first body 200. For example, as a portion of the first body 200 is cut to form the first cutting hole 340, the second fixing plate 320 may be provided to be bendable with respect to the first fixing plate 310. The first cutting hole 340 may have characteristics corresponding to the cutting hole 340 of the fixing portion 300 described above in FIGS. 7 to 9, etc., and a detailed description thereof may not be repeated here.

The fixing portion 300-1 may include a second cutting hole 370-1. The second cutting hole 370-1 may be formed by cutting a portion of the first body 200. The second cutting hole 370-1 may be formed in a shape through which the first body 200 is penetrated.

The second cutting hole 370-1 may be provided on one side of the first fixing plate 310. The second cutting hole 370-1 may be arranged in parallel with the first fixing plate 310. For example, as shown in FIGS. 20 and 21, the second cutting hole 370-1 may be arranged in parallel with the first fixing plate 310 on the Y-Z plane.

The third fixing plate 350-1 may extend from one side of the first fixing plate 310 adjacent to the second cutting hole 370-1. For example, the third fixing plate 350-1 may extend from one side of the first fixing plate 310 to a direction opposite to the second cutting hole 370-1. The second connection portion 360-1 may be provided on one side of the first fixing plate 310 in which the second cutting hole 370-1 is provided.

As a portion of the first body 200 is cut to form the second cutting hole 370-1, the third fixing plate 350-1 may be provided to be bendable with respect to the first fixing plate 310.

In an embodiment, the third fixing plate 350-1 may be in contact with the second fixing plate 320 through a process in which the second cutting hole 370-1 is formed by cutting a portion of the first body 200 and then the cutting portion is bent.

Because the third fixing plate 350-1 is formed in the process of cutting a portion of the first body 200, a size of the second cutting hole 370-1 may be larger than a size of the third fixing plate 350-1. For example, an area of the second cutting hole 370-1 may be greater than an area of the third fixing plate 350-1. Additionally, a X-direction thickness of the second cutting hole 370-1 may approximately correspond to a X-direction thickness of the third fixing plate 350-1.

The fixing portion 300-1 shown in FIGS. 20 and 21 may be formed in the process. The process may include forming the first cutting hole 340 and the second cutting hole 370-1 by cutting a portion of the first body 200, placing the second fixing plate 320 to be in contact with the first fixing plate 310 by bending the first connection portion 330, placing the third fixing plate 350-1 to be in contact with the second fixing plate 320 by bending the second connection portion 360-1, and forming the burring holes 311, 321, and 351-1, and the flanges 312, 322, and 352-1 by sequentially penetrating the first fixing plate 310, the second fixing plate 320, and the third fixing plate 350-1 using the burring tool.

By the above-mentioned structure of the first flange 312, the second flange 322, and the third flange 352-1, the thickness of the burring flange 302 provided on the fixing portion 300 may be increased. Additionally, due to the structure in which the first fixing plate 310, the second fixing plate 320, and the third fixing plate 350-1 are in contact with each other, the protruding length of the burring flange 302 may be increased.

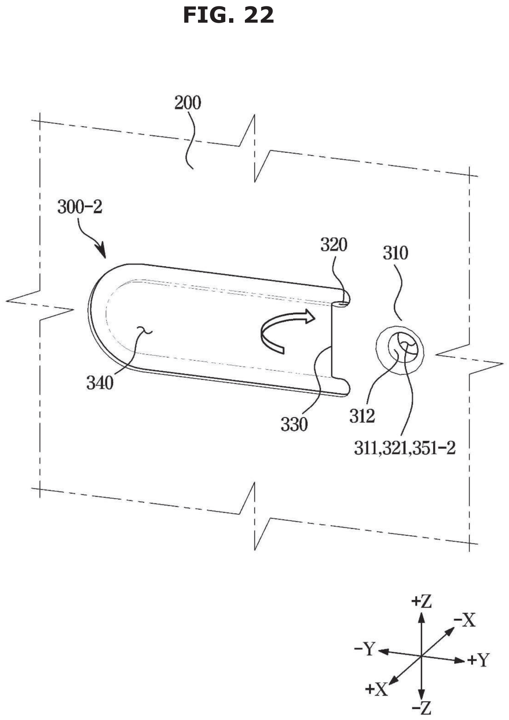

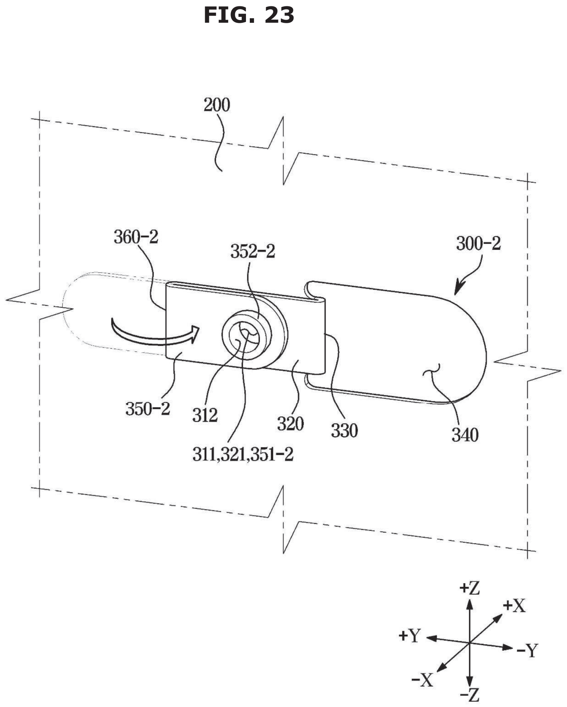

FIG. 22 is a perspective view illustrating a portion of a fixing structure between components included in the outdoor unit of the air conditioner according to various embodiments. FIG. 23 is a perspective view illustrating a portion of the fixing structure between components included in the outdoor unit of the air conditioner according to various embodiments.

In describing a fixing structure between components included in the outdoor unit of the air conditioner according to an embodiment of the present disclosure with reference to FIGS. 22 and 23, the same reference numerals may be given to the same components as those of the example shown in FIGS. 1 to 19, and a description thereof may not be repeated here.

Referring to FIGS. 22 and 23, a first body 200 included in the outdoor unit 10 of the air conditioner 1 according to an embodiment of the present disclosure may include a fixing portion 300-2 to which a second body 400 is fixed.

Although the second body 400 is not shown in FIGS. 22 and 23, the second body 400 described below may have a structure corresponding to the second body 400 described with reference to FIGS. 1 to 19.

In the same manner as the fixing portion 300 according the above-mentioned embodiment, the fixing portion 300-2 of FIGS. 22 and 23 may include a first fixing plate 310 and a second fixing plate 320. A first burring hole 311 may be formed in the first fixing plate 310, and a second burring hole 321 may be formed in the second fixing plate 320. The fixing portion 300-2 may include a first flange 312 provided along a circumference of the first burring hole 311 and provided to protrude from the first fixing plate 310, and a second flange 322 provided along a circumference of the second burring hole 321 and provided to protrude from the second fixing plate 320. As described above, an inner circumferential surface of the second flange 322 and an outer circumferential surface of the first flange 312 may be in contact with each other.

For example, a screw thread having a shape corresponding to a screw thread formed on a body portion FB of a fastening member F may be provided on the inner circumferential surface of the first flange 312.

Additionally, the fixing portion 300-2 may include a third fixing plate 350-2. The third fixing plate 350-2 may be in contact with the second fixing plate 320. For example, the third fixing plate 350-2 may be in contact with the other surface of the second fixing plate 320, which is opposite to the one surface in contact with the first fixing plate 310. The second fixing plate 320 may be disposed between the third fixing plate 350-2 and the first fixing plate 310. As shown in FIGS. 22 and 23, the third fixing plate 350-2 may be in contact with a rear surface of the second fixing plate 320.

For example, the third fixing plate 350-2 may be formed to have a substantially flat plate shape.

For example, the third fixing plate 350-2 may have a thickness that is approximately the same as the thickness of each of the first fixing plate 310 and the second fixing plate 320. For example, the first fixing plate 310, the second fixing plate 320, and the third fixing plate 350-2 may have approximately the same thickness in the direction in which the first fixing plate 310, the second fixing plate 320, and the third fixing plate 350-2 are in contact with each other. The first fixing plate 310, the second fixing plate 320, and the third fixing plate 350-2 may have approximately the same thickness in the X-direction.

The third fixing plate 350-2 may be provided to be penetrated by the fastening member F. The third fixing plate 350-2 may include a third burring hole 351-2. The third burring hole 351-2 may be formed to be penetrated by the fastening member F. For example, the third burring hole 351-2 may be formed in a shape in which the third fixing plate 350-2 is penetrated in the front and rear direction X.

The third burring hole 351-2 may be formed at a position corresponding to the second body hole 410 of the second body 400. For example, the third burring hole 351-2 may be disposed rearward (-X direction) of the second body hole 410.

Additionally, the third burring hole 351-2 may be formed at a position corresponding to the first burring hole 311 and the second burring hole 321. For example, the third burring hole 351-2 may be disposed rearward (-X direction) of the first burring hole 311 and the second burring hole 321. The second burring hole 321 may be disposed between the first burring hole 311 and the third burring hole 351-2.

The fastening member F may sequentially penetrate the second body hole 410, the first burring hole 311, the second burring hole 321, and the third burring hole 351-2, thereby fixing the second body 400 to the first body 200.

The fixing portion 300-2 may include a third flange 352-2. The third flange 352-2 may form a portion of the above-mentioned burring flange 302. The third flange 352-2 may be provided along a circumference of the third burring hole 351-2. The third flange 352-2 may protrude from the third fixing plate 350-2. For example, the third flange 352-2 may protrude from the third fixing plate 350-2 to a direction away from the second body 400. The third flange 352-2 may protrude from the third fixing plate 350-2 to a direction away from the first fixing plate 310. The third flange 352-2 may protrude from the third fixing plate 350-2 to a direction away from the second fixing plate 320. The third flange 352-2 may protrude from the third fixing plate 350-2 to a direction in which the third fixing plate 350-2 is positioned with respect to the second fixing plate 320. As shown in FIGS. 22 and 23, the third flange 352-2 may protrude rearward (-X direction) from the third fixing plate 350-2.

The third burring hole 351-2 may be provided on one side of the third flange 352-2. For example, the third burring hole 351-2 may be provided on one side of the third flange 352-2 adjacent to the second body 400. In an operation of fixing the second body 400 to the first body 200 using the fastening member F, the fastening member F may enter an inside of the third flange 352-2 through the third burring hole 351-2.

For example, the third burring hole 351-2 may have a substantially circular shape. At this time, the third flange 352-2 may have a cylindrical shape with a hollow corresponding to the third burring hole 351-2. The hollow of the third flange 352-2 may be provided to allow the fastening member F to penetrate therethrough.

The third flange 352-2 may be provided to support the fastening member F. When fixing the second body 400 to the first body 200, the fastening member F may be arranged to penetrate the third flange 352-2 and supported by the third flange 352-2.

The third flange 352-2 may be disposed in a radially outward direction than the first flange 312 and the second flange 322. The first flange 312 and the second flange 322 may be disposed in a radially inward direction than the third flange 352-2. The first flange 312 may form an inner circumferential surface of the above-described burring flange 302, and the third flange 352-2 may form an outer circumferential surface of the above-described burring flange 302.

The third flange 352-2 may be in contact with the second flange 322. For example, the inner circumferential surface of the third flange 352-2 may be in contact with the outer circumferential surface of the second flange 322. The third flange 352-2 may be provided to surround the outer circumferential surface of the second flange 322. The second flange 322 may support the third flange 352-2 in the radially inward direction. The third flange 352-2 may support the second flange 322 in the radially outward direction.

The first burring hole 311, the second burring hole 321, and the third burring hole 351-2 may be arranged to allow centers thereof to be parallel to each other. Correspondingly, a longitudinal central axis of the first flange 312, a longitudinal central axis of the second flange 322, and a longitudinal central axis of the third flange 352-2 may coincide with each other.

For example, an end of the first flange 312 in the direction away from the first fixing plate 310, an end of the second flange 322 in the direction away from the second fixing plate 320, and an end of the third flange 352-2 in the direction away from the third fixing plate 350-2 may be parallel to each other.

As described above, the first fixing plate 310 and the second fixing plate 320 may be connected to each other. The second fixing plate 320 may extend from one side of the first fixing plate 310. The fixing portion 300-2 may include a first connection portion 330 provided to connect the first fixing plate 310 and the second fixing plate 320.

The second fixing plate 320 and the third fixing plate 350-2 may be connected to each other. The third fixing plate 350-2 may extend from one side of the second fixing plate 320. The third fixing plate 350-2 may extend from one side of the second fixing plate 320 toward the other side.

For example, the third fixing plate 350-2 may extend from one side of the second fixing plate 320 opposite to the first connection portion 330.

The fixing portion 300-2 may include a second connection portion 360-2 connecting the second fixing plate 320 and the third fixing plate 350-1. The second connection portion 360-2 may be provided on one side of the second fixing plate 320. The second connection portion 360-2 may extend from one side of the second fixing plate 320 to the third fixing plate 350-2. The second connection portion 360-2 may have a bent shape extending from one side of the second fixing plate 320 to the third fixing plate 350-2.

The second connection portion 360-2 may extend from one side of the second fixing plate 320, and the third fixing plate 350-2 may extend from the second connection portion 360-2 toward the other side opposite to the second connection portion 360-2. Accordingly, the third fixing plate 350-2 may face the second fixing plate 320. Accordingly, the third fixing plate 350-2 may come into contact with the second fixing plate 320.

The third fixing plate 350-2 may be bent from one side of the second fixing plate 320 to a direction opposite to the second body 400. As shown in FIGS. 22 and 23, the third fixing plate 350-2 may be bent rearward (-X direction) from one side of the second fixing plate 320 so as to be in contact with the rear surface of the second fixing plate 320.

The second fixing plate 320 and the third fixing plate 350-2 may be formed integrally. The third fixing plate 350-2 may be bent and extended from one side of the second fixing plate 320. For example, a bent portion on one side of the second fixing plate 320 may be formed as the second connection portion 360-2, and the third fixing plate 350-2 may be extended from the second connection portion 360-2. The second fixing plate 320, the second connection portion 360-2, and the third fixing plate 350-2 may be formed integrally. Further, the configuration from the first fixing plate 310 to the third fixing plate 350-2 may be formed integrally.

As mentioned above, the fixing portion 300-2 may include a cutting hole 340. The cutting hole 340 may be formed by cutting a portion of the first body 200. For example, as a portion of the first body 200 is cut to form the cutting hole 340, the second fixing plate 320 and the third fixing plate 350-2, which are formed integrally, may be provided to be bendable with respect to the first fixing plate 310.

Because the second fixing plate 320 and the third fixing plate 350-2 are formed in the process of cutting a portion of the first body 200, a size of the cutting hole 340 may be larger than sizes of the second fixing plate 320 and the third fixing plate 350-2. For example, an area of the cutting hole 340 may be greater than an area of the second fixing plate 320 and an area of the third fixing plate 350-2. Additionally, a X-direction thickness of the cutting hole 340 may approximately correspond to a X-direction thickness of each of the second fixing plate 320 and the third fixing plate 350-2.

The fixing portion 300-2 shown in FIGS. 22 and 23 may be formed in the process. The process may include forming the cutting hole 340 by cutting a portion of the first body 200, placing the second fixing plate 320 to be in contact with the first fixing plate 310 by bending the first connection portion 330, placing the third fixing plate 350-2 to be in contact with the second fixing plate 320 by bending the second connection portion 360-2, and forming the burring holes 311, 321, and 351-2, and the flanges 312, 322, and 352-2 by sequentially penetrating the first fixing plate 310, the second fixing plate 320, and the third fixing plate 350-2 using the burring tool.

By the above-mentioned structure of the first flange 312, the second flange 322, and the third flange 352-2, the thickness of the burring flange 302 provided on the fixing portion 300 may be increased. Additionally, due to the structure in which the first fixing plate 310, the second fixing plate 320, and the third fixing plate 350-2 are in contact with each other, the protruding length of the burring flange 302 may be increased.

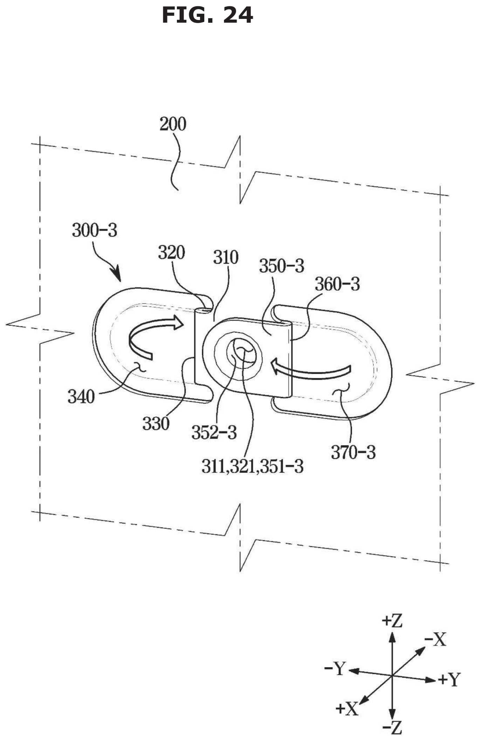

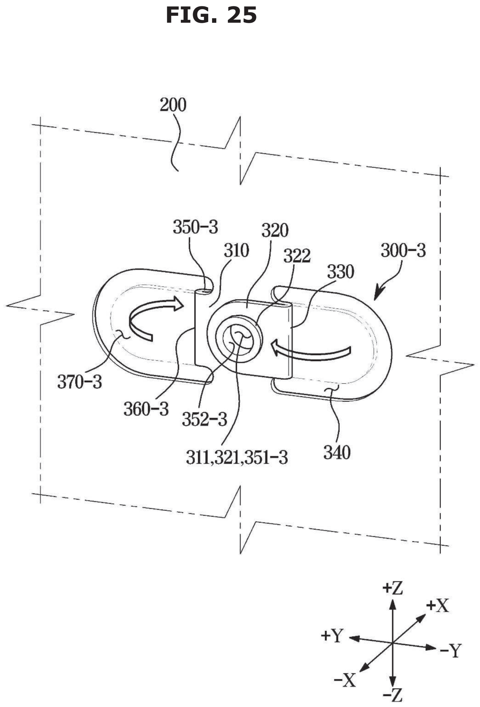

FIG. 24 is a perspective view illustrating a portion of a fixing structure between components included in the outdoor unit of the air conditioner according to various embodiments. FIG. 25 is a perspective view illustrating a portion of the fixing structure between components included in the outdoor unit of the air conditioner according to various embodiments.

In describing a fixing structure between components included in the outdoor unit of the air conditioner according to an embodiment of the present disclosure with reference to FIGS. 24 and 25, the same reference numerals may be given to the same components as those of the example shown in FIGS. 1 to 19, and a description thereof may not be repeated here.

Referring to FIGS. 24 and 25, a first body 200 included in the outdoor unit 10 of the air conditioner 1 according to an embodiment of the present disclosure may include a fixing portion 300-3 to which a second body 400 is fixed.

Although the second body 400 is not shown in FIGS. 24 and 25, the second body 400 described below may have a structure corresponding to the second body 400 described with reference to FIGS. 1 to 19.

In the same manner as the fixing portion 300 according the above-mentioned embodiment, the fixing portion 300-3 of FIGS. 24 and 25 may include a first fixing plate 310 and a second fixing plate 320. A first burring hole 311 may be formed in the first fixing plate 310, and a second burring hole 321 may be formed in the second fixing plate 320. The fixing portion 300-3 may include a first flange 312 provided along a circumference of the first burring hole 311 and provided to protrude from the first fixing plate 310, and a second flange 322 provided along a circumference of the second burring hole 321 and provided to protrude from the second fixing plate 320. As described above, an inner circumferential surface of the second flange 322 and an outer circumferential surface of the first flange 312 may be in contact with each other.

Additionally, the fixing portion 300-3 may include a third fixing plate 350-3. The third fixing plate 350-3 may be in contact with the first fixing plate 310. Further, the third fixing plate 350-3 may be in contact with the second body 400. For example, the third fixing plate 350-3 may be in contact with the other surface of the first fixing plate 310, which is opposite to the one surface in contact with the second fixing plate 320. The third fixing plate 350-3 may be disposed between and the first fixing plate 310 and the second body 400. As shown in FIGS. 24 and 25, the third fixing plate 350-3 may be in contact with a front surface of the first fixing plate 310.

For example, the third fixing plate 350-3 may be formed to have a substantially flat plate shape.

For example, the third fixing plate 350-3 may have a thickness that is approximately the same as the thickness of each of the first fixing plate 310 and the second fixing plate 320. For example, the first fixing plate 310, the second fixing plate 320, and the third fixing plate 350-3 may have approximately the same thickness in the direction in which the first fixing plate 310, the second fixing plate 320, and the third fixing plate 350-3 are in contact with each other. The first fixing plate 310, the second fixing plate 320, and the third fixing plate 350-3 may have approximately the same thickness in the X-direction.

The third fixing plate 350-3 may be provided to be penetrated by the fastening member F. The third fixing plate 350-3 may include a third burring hole 351-3. The third burring hole 351-3 may be formed to be penetrated by the fastening member F. For example, the third burring hole 351-3 may be formed in a shape in which the third fixing plate 350-3 is penetrated in the front and rear direction X.

The third burring hole 351-3 may be formed at a position corresponding to the second body hole 410 of the second body 400. For example, the third burring hole 351-3 may be disposed rearward (-X direction) of the second body hole 410.

Additionally, the third burring hole 351-3 may be formed at a position corresponding to the first burring hole 311 and the second burring hole 321. For example, the third burring hole 351-3 may be disposed forward (+X direction) of the first burring hole 311 and the second burring hole 321. The first burring hole 311 may be disposed between the second body hole 410 of the second body 400 and the third burring hole 351-3.

The fastening member F may sequentially penetrate the second body hole 410, the third burring hole 351-3, the first burring hole 311, and the second burring hole 321, thereby fixing the second body 400 to the first body 200.

The fixing portion 300-3 may include a third flange 352-3. The third flange 352-3 may form a portion of the above-mentioned burring flange 302. The third flange 352-3 may be provided along a circumference of the third burring hole 351-3. The third flange 352-3 may protrude from the third fixing plate 350-3. For example, the third flange 352-3 may protrude from the third fixing plate 350-3 to a direction away from the second body 400. The third flange 352-3 may protrude from the third fixing plate 350-3 to a direction of penetrating the first burring hole 311 and/or the second burring hole 321. The third flange 352-3 may protrude from the third fixing plate 350-3 to a direction in which the first fixing plate 310 is positioned with respect to the third fixing plate 350-3. As shown in FIGS. 24 and 25, the third flange 352-3 may protrude rearward (-X direction) from the third fixing plate 350-3.

The third burring hole 351-3 may be provided on one side of the third flange 352-3. For example, the third burring hole 351-3 may be provided on one side of the third flange 352-3 adjacent to the second body 400. In an operation of fixing the second body 400 to the first body 200 using the fastening member F, the fastening member F may enter an inside of the third flange 352-3 through the third burring hole 351-3.

For example, the third burring hole 351-3 may have a substantially circular shape. At this time, the third flange 352-3 may have a cylindrical shape with a hollow corresponding to the third burring hole 351-3. The hollow of the third flange 352-3 may be provided to allow the fastening member F to penetrate therethrough.

The third flange 352-3 may be provided to support the fastening member F. When fixing the second body 400 to the first body 200, the fastening member F may be arranged to penetrate the third flange 352-3 and supported by the third flange 352-3.

The third flange 352-3 may be disposed in a radially inward direction than the first flange 312 and the second flange 322. The first flange 312 and the second flange 322 may be disposed in a radially outward direction than the third flange 352-3. The second flange 322 may form an outer circumferential surface of the above-described burring flange 302, and the third flange 352-3 may form an inner circumferential surface of the above-described burring flange 302.

For example, a screw thread having a shape corresponding to a screw thread formed on a body portion FB of a fastening member F may be provided on the inner circumferential surface of the third flange 352-3.

The third flange 352-3 may be in contact with the first flange 312. For example, the outer circumferential surface of the third flange 352-3 may be in contact with the outer circumferential surface of the first flange 312. The first flange 312 and the second flange 322 may be provided to surround the outer circumferential surface of the third flange 352-3. The third flange 352-3 may support the first flange 312 and the second flange 322 in the radially inward direction. The first flange 312 and the second flange 322 may support the third flange 352-3 in the radially outward direction.

The first burring hole 311, the second burring hole 321, and the third burring hole 351-3 may be arranged to allow centers thereof to be parallel to each other. Correspondingly, a longitudinal central axis of the first flange 312, a longitudinal central axis of the second flange 322, and a longitudinal central axis of the third flange 352-3 may coincide with each other.

For example, an end of the first flange 312 in the direction away from the first fixing plate 310, an end of the second flange 322 in the direction away from the second fixing plate 320, and an end of the third flange 352-3 in the direction away from the third fixing plate 350-1 may be parallel to each other.

As described above, the first fixing plate 310 and the second fixing plate 320 may be connected to each other. The second fixing plate 320 may extend from one side of the first fixing plate 310. The fixing portion 300-3 may include a first connection portion 330 provided to connect the first fixing plate 310 and the second fixing plate 320.

The first fixing plate 310 and the third fixing plate 350-3 may be connected to each other. The third fixing plate 350-3 may extend from one side of the first fixing plate 310. The third fixing plate 350-3 may extend from one side of the first fixing plate 310 toward the other side.

For example, the third fixing plate 350-3 may extend from one side opposite to the second fixing plate 320 with respect to the first fixing plate 310.

The fixing portion 300-3 may include a second connection portion 360-3 connecting the first fixing plate 310 and the third fixing plate 350-3. The second connection portion 360-3 may be provided on one side of the first fixing plate 310. The second connection portion 360-3 may extend from one side of the first fixing plate 310 to the third fixing plate 350-3. The second connection portion 360-3 may have a bent shape extending from one side of the first fixing plate 310 to the third fixing plate 350-3.

The second connection portion 360-3 may extend from one side of the first fixing plate 310, and the third fixing plate 350-3 may extend from the second connection portion 360-3 toward the other side opposite to the second connection portion 360-3. Accordingly, the third fixing plate 350-3 may face the first fixing plate 310. Accordingly, the third fixing plate 350-3 may come into contact with the first fixing plate 310.

The third fixing plate 350-3 may be bent from one side of the first fixing plate 310 to a direction toward the second body 400. As shown in FIGS. 24 and 25, the third fixing plate 350-3 may be bent forward (+X direction) from one side of the first fixing plate 310 so as to be in contact with the front surface of the first fixing plate 310.

The first fixing plate 310 and the third fixing plate 350-3 may be formed integrally. The third fixing plate 350-3 may be bent and extended from one side of the first fixing plate 310. For example, a bent portion on one side of the first fixing plate 310 may be formed as the second connection portion 360-3, and the third fixing plate 350-3 may be extended from the second connection portion 360-3. The first fixing plate 310, the second connection portion 360-3, and the third fixing plate 350-3 may be formed integrally.

For example, the fixing portion 300-3 may include a first cutting hole 340. The first cutting hole 340 may be formed by cutting a portion of the first body 200. For example, as a portion of the first body 200 is cut to form the first cutting hole 340, the second fixing plate 320 may be provided to be bendable with respect to the first fixing plate 310. The first cutting hole 340 may have characteristics corresponding to the cutting hole 340 of the fixing portion 300 described above in FIGS. 7 to 9, etc., and a detailed description thereof may not be repeated here.

The fixing portion 300-1 may include a second cutting hole 370-3. The second cutting hole 370-3 may be formed by cutting a portion of the first body 200. The second cutting hole 370-3 may be formed in a shape through which the first body 200 is penetrated.

The second cutting hole 370-3 may be provided on one side of the first fixing plate 310. The second cutting hole 370-3 may be arranged parallel to the first fixing plate 310. For example, as shown in FIGS. 24 and 25, the second cutting hole 370-3 may be arranged parallel to the first fixing plate 310 on the Y-Z plane.

The third fixing plate 350-3 may extend from one side of the first fixing plate 310 adjacent to the second cutting hole 370-3. For example, the third fixing plate 350-3 may extend from one side of the first fixing plate 310 to a direction opposite to the second cutting hole 370-3. The second connection portion 360-3 may be provided on one side of the first fixing plate 310 in which the second cutting hole 370-3 is provided.

As a portion of the first body 200 is cut to form the second cutting hole 370-3, the third fixing plate 350-3 may be provided to be bendable with respect to the first fixing plate 310.

In an embodiment, the third fixing plate 350-3 may be in contact with the second fixing plate 320 through a process in which the second cutting hole 370-3 is formed by cutting a portion of the first body 200 and then the cutting portion is bent.

Because the third fixing plate 350-3 is formed in the process of cutting a portion of the first body 200, a size of the second cutting hole 370-3 may be larger than a size of the third fixing plate 350-3. For example, an area of the second cutting hole 370-3 may be greater than an area of the third fixing plate 350-3. Additionally, a X-direction thickness of the second cutting hole 370-3 may approximately correspond to a X-direction thickness of the third fixing plate 350-3.

The fixing portion 300-3 shown in FIGS. 24 and 25 may be formed in an example process. The process may include forming the first cutting hole 340 and the second cutting hole 370-3 by cutting a portion of the first body 200, placing the second fixing plate 320 to be in contact with the first fixing plate 310 by bending the first connection portion 330, placing the third fixing plate 350-3 to be in contact with the second fixing plate 320 by bending the second connection portion 360-3, and forming the burring holes 311, 321, and 351-3, and the flanges 312, 322, and 352-3 by sequentially penetrating the third fixing plate 350-3, the first fixing plate 310, and the second fixing plate 320 using the burring tool.

By the above-mentioned structure of the first flange 312, the second flange 322, and the third flange 352-3, the thickness of the burring flange 302 provided on the fixing portion 300 may be increased. Additionally, due to the structure in which the first fixing plate 310, the second fixing plate 320, and the third fixing plate 350-3 are in contact with each other, the protruding length of the burring flange 302 may be increased.

The fixing structure between components included in the outdoor unit 10 of the air conditioner 1 described with reference to FIGS. 1 to 25 may be applied to various components such as the indoor unit 20 of the air conditioner 1 in addition to the outdoor unit 10. Further, the fixing structure between components described in the present disclosure may be applied to a fixing structure between components in various products other than the air conditioner 1.

The outdoor unit of the air conditioner according to an example embodiment of the present disclosure may include: a first body, and a second body provided to be fixed to the first body by a fastener. The first body may include: a first fixing plate including a first burring hole configured to be penetrated by the fastener, the first fixing plate provided to support the second body, a second fixing plate including a second burring hole configured to be penetrated by the fastener and disposed to correspond to the first burring hole, the second fixing plate provided to be in contact with an other surface of the first fixing plate opposite to one surface adjacent to the second body, a first flange provided along the circumference of the first burring hole and protruding from the first fixing plate in a direction of penetrating the second burring hole, and a second flange provided along the circumference of the second burring hole and protruding from the second fixing plate in a direction away from the first fixing plate. An inner circumferential surface of the second flange may be in contact with an outer circumferential surface of the first flange.

The second fixing plate and the second flange may surround the outer circumferential surface of the first flange.

The first fixing plate and the second fixing plate may be connected to each other.

The first body may further include: a connection portion provided to connect the first fixing plate and the second fixing plate. The connection portion may extend from one side of the first fixing plate. The second fixing plate may extend from the connection portion 330 to the other side to face the first fixing plate.

The first fixing plate and the second fixing plate may be integrally formed. The second fixing plate may be bent and extended from one side of the first fixing plate.

The first body may further include the cutting hole provided on one side of the first fixing plate.

The second fixing plate may extend from the one side of the first fixing plate to a direction opposite to the cutting hole.

A size of the cutting hole may be larger than a size of the second fixing plate.

The second body may be movable along the second direction different from the first direction between the first position separatable from the first body and the second position restrained in the first direction with respect to the first body. The second body may further include a guide protrusion configured to guide the second body moving between the first position and the second position with respect to the first body. The guide protrusion may be arranged to penetrate a cutting hole in response to the second body being positioned between the first position and the second position.

The longitudinal central axis of the first flange and the longitudinal central axis of the second flange may coincide with each other.

An end of the first flange in the direction of protruding from the first fixing plate and an end of the second flange in the direction of protruding from the second fixing plate may be parallel to each other.

The first fixing plate may be provided to be in contact with the second body.

The first body may include the third fixing plate including a third burring hole configured to be penetrated by the fastener, the third fixing plate provided to be in contact with the other surface of the second fixing plate opposite to one surface in contact with the first fixing plate, and the third flange 352 provided along the circumference of the third burring hole and protruding from the third fixing plate in the direction away from the second fixing plate. The inner circumferential surface of the third flange may be in contact with the outer circumferential surface of the second flange.

The first body may include a third fixing plate including a third burring hole configured to be penetrated by the fastener, a third fixing plate arranged between the first fixing plate and the second body, and a third flange provided along the circumference of the third burring hole and protruding from the third fixing plate in a direction away from the second body. The inner circumferential surface of the first flange may be in contact with the outer circumferential surface of the third flange.

According to an example embodiments of the present disclosure, the manufacturing method of the outdoor unit of the air conditioner including the first body and the second body fixed to the first body by the fastener may include: placing the first fixing plate and the second fixing plate of the first body to be in contact with each other, forming the burring hole and the burring flange provided along the circumference of the burring hole, in the first body by sequentially penetrating the first fixing plate and the second fixing plate in a direction, from the first fixing plate to the second fixing plate, using the burring tool, and placing the second body, the first fixing plate, and the second fixing plate, sequentially, and fixing the second body to the first body using the fastening member penetrating the second body and the burring hole.

The forming of the burring hole and the burring flange provided along the circumference of the burring hole, in the first body may include forming the first burring hole and the first flange provided along the circumference of the first burring hole and provided to protrude to penetrate the second fixing plate, in the first fixing plate, and forming the second burring hole and the second flange provided along the circumference of the second burring hole, provided to protrude in a direction away from the first fixing plate, and provided to be in contact with an outer circumferential surface of the first flange, in the second fixing plate.

The second fixing plate may extend from one side of the first fixing plate. The placing of the first fixing plate and the second fixing plate to be in contact with each other may include bending the connection portion, provided to connect the first fixing plate and the second fixing plate, to allow the second fixing plate to be in contact with the first fixing plate.

The manufacturing method of the outdoor unit of the air conditioner may further include cutting a portion of the first body disposed on one side of the first fixing plate, so as to allow the second fixing plate to be bent with respect to the first fixing plate.

The outdoor unit of the air conditioner according to an example embodiment of the present disclosure may include: the first body, and the second body provided to be fixed to the first body by the fastener. The first body may include the first plate portion including the first burring hole configured to be penetrated by the fastener, one surface of the first plate portion being in contact with the second body, the second plate portion including the second burring hole configured to be penetrated by the fastener, the second plate portion extending from one side of the first plate portion and provided to be in contact with the other surface opposite to the one surface of the first plate portion, and the flange portion provided to support the fastener, formed along the circumference of the second burring hole, and protruding from the second plate portion in a direction away from the first plate portion.

The flange portion may be the outer flange portion. The first body may further include the inner flange portion provided to support the fastener, formed along the circumference of the first burring hole, and protruding from the first plate portion to a direction of penetrating the second burring hole. The inner circumferential surface of the outer flange portion may be in contact with the outer circumferential surface of the inner flange portion.

As is apparent from the above description, an outdoor unit of an air conditioner may include a fixing structure including a first flange and a second flange in contact with each other, and thus a fastening member may be stably supported.

Further, an outdoor unit of an air conditioner may include a fixing structure including a first flange and a second flange in contact with each other, and thus it is possible to effectively prevent and/or reduce a burring flange from being damaged due to reasons such as wear of screw thread.

Further, an outdoor unit of an air conditioner may include a fixing structure including a first fixing plate and a second fixing plate in contact with each other, and thus a fastening member may be stably supported.

Further, an outdoor unit of an air conditioner may include a fixing structure including a first fixing plate and a second fixing plate in contact with each other, and thus it is possible to effectively prevent and/or reduce a burring flange from being damaged due to reasons such as wear of screw thread.

Further, a fixing structure of an outdoor unit of an air conditioner may stably support a fastening member and a burring flange of the fixing structure may be prevented and/or reduced from being damaged. Accordingly, a fixing force between two bodies fixed by the fixing structure may be increased.

Further, a fixing structure of an outdoor unit of an air conditioner may stably support a fastening member and a burring flange of the fixing structure may be prevented and/or reduced from being damaged. Accordingly, it is possible to manufacture components with a thin material and thus it is possible to reduce a weight of the components.

Further, a fixing structure of an outdoor unit of an air conditioner may not require an additional component to improve a fixing force, and thus manufacturing costs may be reduced.

Further, an outdoor unit of an air conditioner may include a first fixing plate and a second fixing plate which are integrally formed with each other, and thus it is possible to prevent and/or reduce worker injury or a component such as a wire being damaged due to a connecting portion between the first fixing plate and the second fixing plate.

Additional aspects of the disclosure will be set forth in part in the description which follows and, in part, will be obvious from the description, or may be learned by practice of the disclosure.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure including the appended claims and their equivalents. It will also be understood that any of the embodiment(s) described herein may be used in conjunction with any other embodiment(s) described herein.

## Claims

1. An outdoor unit of an air conditioner comprising:
a first body; and
a second body provided to be fixed to the first body by a fastener,
wherein the first body comprises:
a first fixing plate comprising a first burring hole configured to be penetrated by the fastener, the first fixing plate provided to support the second body;
a second fixing plate comprising a second burring hole configured to be penetrated by the fastener and disposed to correspond to the first burring hole, the second fixing plate provided to be in contact with one surface of the first fixing plate opposite to another surface of the first fixing plate adjacent to the second body;
a first flange provided along a circumference of the first burring hole and protruding from the first fixing plate in a direction of penetrating the second burring hole; and
a second flange provided along a circumference of the second burring hole and protruding from the second fixing plate in a direction away from the first fixing plate,
wherein an inner circumferential surface of the second flange is in contact with an outer circumferential surface of the first flange.

2. The outdoor unit of the air conditioner of claim 1, wherein
the second fixing plate and the second flange surround the outer circumferential surface of the first flange.

3. The outdoor unit of the air conditioner of claim 1, wherein
the first fixing plate and the second fixing plate are connected to each other.

4. The outdoor unit of the air conditioner of claim 3, wherein
the first body further comprises a connection portion provided to connect the first fixing plate and the second fixing plate,
wherein the connection portion extends from one side of the first fixing plate,
wherein the second fixing plate extends from the connection portion to another side to face the first fixing plate.

5. The outdoor unit of the air conditioner of claim 3, wherein
the first fixing plate and the second fixing plate are integrally formed; and
the second fixing plate is bent and extended from one side of the first fixing plate.

6. The outdoor unit of the air conditioner of claim 1, wherein
the first body further comprises a cutting hole provided on one side of the first fixing plate.

7. The outdoor unit of the air conditioner of claim 6, wherein
the second fixing plate extends from the one side of the first fixing plate in a direction opposite the cutting hole.

8. The outdoor unit of the air conditioner of claim 6, wherein
a size of the cutting hole is greater than a size of the second fixing plate.

9. The outdoor unit of the air conditioner of claim 6, wherein
between a first position separatable from the first body and a second position restrained in a first direction with respect to the first body, the second body is configured to be movable along a second direction different from the first direction,
wherein the second body further comprises a guide protrusion configured to guide the second body moving between the first position and the second position with respect to the first body,
wherein the guide protrusion is arranged to penetrate the cutting hole in response to the second body being positioned between the first position and the second position.

10. The outdoor unit of the air conditioner of claim 1, wherein
a longitudinal central axis of the first flange and a longitudinal central axis of the second flange coincide with each other.

11. The outdoor unit of the air conditioner of claim 1, wherein
an end of the first flange in a direction of protruding from the first fixing plate and an end of the second flange in a direction of protruding from the second fixing plate are parallel to each other.

12. The outdoor unit of the air conditioner of claim 1, wherein
the first fixing plate is provided to be in contact with the second body.

13. The outdoor unit of the air conditioner of claim 1, wherein
the first body comprises:
a third fixing plate comprising a third burring hole configured to be penetrated by the fastener, the third fixing plate provided to be in contact with one surface of the second fixing plate opposite to another surface of the second fixing plate in contact with the first fixing plate; and
a third flange provided along a circumference of the third burring hole and protruding from the third fixing plate in a direction away from the second fixing plate,
wherein an inner circumferential surface of the third flange is in contact with an outer circumferential surface of the second flange.

14. The outdoor unit of the air conditioner of claim 1, wherein
the first body comprises:
a third fixing plate comprising a third burring hole configured to be penetrated by the fastener, the third fixing plate arranged between the first fixing plate and the second body; and
a third flange provided along a circumference of the third burring hole and protruding from the third fixing plate in a direction away from the second body,
wherein an inner circumferential surface of the first flange is in contact with an outer circumferential surface of the third flange.

15. A method of manufacturing an outdoor unit of an air conditioner comprising a first body and a second body fixed to the first body by a fastener, the manufacturing method comprising:
placing a first fixing plate and a second fixing plate of the first body to be in contact with each other;
forming a burring hole and a burring flange provided along a circumference of the burring hole, in the first body by sequentially penetrating the first fixing plate and the second fixing plate in a direction, from the first fixing plate to the second fixing plate, using a burring tool; and
placing the second body, the first fixing plate, and the second fixing plate, sequentially, and fixing the second body to the first body using the fastener penetrating the second body and the burring hole.
